# EUROPEAN PATENT APPLICATION

(11) **EP 4 796 829 A1**
(43) Date of publication of application: **26.08.2026**
(21) Application number: 24888009.8
(22) Date of filing: 06.11.2024
(51) Int. Cl.: F16M 11/24

(54) **LIFTING/LOWERING MECHANISM, CAMERA APPARATUS, AND ELECTRONIC DEVICE**

(30) Priority: 08.11.2023 CN 202311486313
(71) Applicant: HUAWEI TECHNOLOGIES CO., LTD., Shenzhen 518129 (CN)
(72) Inventor: SHEN, Hewen, Shenzhen, Guangdong 518129 (CN); FAN, Wen, Shenzhen, Guangdong 518129 (CN); ZHONG, Ding, Shenzhen, Guangdong 518129 (CN); ZHANG, Zhibin, Shenzhen, Guangdong 518129 (CN); ZHENG, Yi, Shenzhen, Guangdong 518129 (CN); LI, Kaixu, Shenzhen, Guangdong 518129 (CN)
(74) Representative: Gill Jennings & Every LLP
(86) International application number: PCT/CN2024/130253
(87) International publication number: WO 2025/098398

(57) **Abstract**

This application provides a lifting mechanism, a camera apparatus, and an electronic device. The lifting mechanism includes a base, a lifting member, and a connecting rod assembly. The connecting rod assembly includes a long rod, a short rod, and a connecting rod. A first end of the long rod is rotatably connected to a first fastening part of the base, a second end is rotatably connected to a first end of the lifting member, and the long rod includes a transition part located between the two ends. The short rod includes a first rotating part, a second rotating part, and a third rotating part that are fastened to each other. The first rotating part is rotatably connected to a second fastening part of the base, the second rotating part is slidably or rotatably connected to a second end of the lifting member, and the second end of the lifting member is closer to the first end of the long rod than the first end of the lifting member. A first end of the connecting rod is rotatably connected to the transition part, and a second end is rotatably connected to the third rotating part. When the short rod moves under force, the short rod and the long rod jointly drive the lifting member to rise and fall relative to the base. The lifting mechanism provided in this application has a four-connecting rod structure, to improve retraction smoothness of the lifting mechanism.

## Description

This application claims priority to Chinese Patent Application No. 202311486313.8, filed with the China National Intellectual Property Administration on November 8, 2023, and entitled "LIFTING MECHANISM, CAMERA APPARATUS, AND ELECTRONIC DEVICE", which is incorporated herein by reference in its entirety.

### TECHNICAL FIELD

This application relates to the field of terminal technologies, and in particular, to a lifting mechanism, a camera apparatus, and an electronic device.

### BACKGROUND

As image shooting functions of electronic devices become more sophisticated, users are increasingly demanding telephoto capabilities. For example, electronic devices with image shooting functions, such as mobile phones and tablet computers, are commonly expected to have telephoto shooting functions. With an increasingly thin form of the electronic device, integration of a telephoto lens inevitably entails a retractable lifting mechanism.

Existing lifting mechanisms are primarily driven by spiral or inclined grooves. A common issue with this solution is that during lifting of the lifting mechanism, a lifting member lacks stable guidance and is prone to jamming.

Therefore, how to improve retraction smoothness of the lifting mechanism becomes a technical problem that needs to be resolved.

### SUMMARY

An objective of this application is to provide a lifting mechanism, a camera apparatus, and an electronic device. The lifting mechanism has a connecting rod assembly with a four-connecting rod structure, to improve retraction smoothness of the lifting mechanism.

According to a first aspect, this application provides a lifting mechanism, which may be used in a camera apparatus including a camera module. The lifting mechanism includes a base, a lifting member, and a connecting rod assembly; and both the lifting member and the connecting rod assembly are movably mounted on an inner side of the base. The base has a first fastening part and a second fastening part that are spaced apart.

The connecting rod assembly includes a long rod, a short rod, and a connecting rod. A first end of the long rod is rotatably connected to the first fastening part, a second end of the long rod is rotatably connected to a first end of the lifting member, the long rod includes a transition part, and the transition part is located between the first end of the long rod and the second end of the long rod. The short rod includes a first rotating part, a second rotating part, and a third rotating part that are fastened to each other. The first rotating part is rotatably connected to the second fastening part. The second rotating part is slidably or rotatably connected to a second end of the lifting member. The second end of the lifting member is closer to the first end of the long rod than the first end of the lifting member. A first end of the connecting rod is rotatably connected to the transition part, and a second end of the connecting rod is rotatably connected to the third rotating part.

When the short rod moves under force, the short rod and the long rod jointly drive the lifting member to rise and fall relative to the base.

In this application, a part between the first fastening part and the second fastening part of the base may be considered as a fastening rod of the base. The long rod may include a first segment and a second segment that are fastened. The first segment of the long rod is a connection line between rotational connection centers: a rotational connection center of the first end of the long rod and the first fastening part, and a rotational connection center of the transition part and the first end of the connecting rod. The second segment of the long rod is a connection line between rotational connection centers: a rotational connection center of the transition part and the first end of the connecting rod, and a rotational connection center of the second end of the long rod and the first end of the lifting member. The short rod may include a first segment and a second segment that are fastened. The first segment of the short rod is a connection line between a rotational connection center of the first rotating part and the second fastening part, and a center of rotation of the third rotating part. The second segment of the short rod is a connection line between a rotational connection center of the second rotating part and the second end of the lifting member, and the center of rotation of the third rotating part. The fastening rod, the first segment of the long rod, the connecting rod, and the first segment of the short rod are sequentially rotatably connected from end to end, to form a four-connecting rod mechanism. The second segment of the long rod and the second segment of the short rod can rise and fall together with a motion of the four-connecting rod mechanism, and the four-connecting rod mechanism improves retraction smoothness of the lifting mechanism.

In some possible implementations, the connecting rod assembly includes a long balancing rod and a short balancing rod. The long balancing rod includes a long support rod and two long rods. The two long rods are disposed opposite to each other and are respectively located on two sides of the lifting member, and first ends of the two long rods are respectively fastened to two ends of the long support rod. The short balancing rod is located between the two long rods, the short balancing rod includes a short support rod and two short rods, and the two short rods are disposed opposite to each other and are respectively connected to two ends of the short support rod. The connecting rod assembly includes two groups of transmission members symmetrically disposed, and each group of transmission members includes one of the long rods, one of the short rods, and one of connecting rods.

In this implementation, the two groups of transmission members are connected through the long support rod and the short support rod, so that the two groups of four-connecting rod mechanisms can move simultaneously. Under the drive of the two short rods, the first side and the second side of the lifting member can rise and fall simultaneously, making the second end of the lifting member rise and fall smoothly. Under the drive of the two long rods, the first side and the second side at the first end of the lifting member can rise and fall simultaneously, making the first end of the lifting member rise and fall smoothly. Under the joint drive of the two short rods and the two long rods, the first end and the second end of the lifting member can rise and fall simultaneously, making the entire lifting member rise and fall smoothly. Therefore, the two groups of four-connecting rod mechanisms are simultaneously driven, so that the two sides of the lifting member can be simultaneously driven to rise and fall, thereby improving lifting stability of the lifting member.

The two groups of transmission members may be symmetrically connected to the first side of the lifting member and the second side of the lifting member.

In this implementation, the two long rods are fastened through the long support rod, so that two second rotating shafts rotatably connected to two sides of the first end of the lifting member are located on the long balancing rod. In this way, the two second rotating shafts can move synchronously, thereby implementing lifting balance between the first side and the second side of the lifting member on the first end, and improving lifting smoothness of the lifting member. The two short rods are fastened through the short support rod, so that two second rotating pins slidably connected to two sides of the second end of the lifting member are located on the short balancing rod. In this way, the two second rotating pins can move synchronously, thereby implementing lifting balance between the first side and the second side of the lifting member on the second end.

In this implementation, in each group of transmission members, the connecting rod is correspondingly rotatably connected to one long rod and one short rod, so that the long rod and the short rod in each group of transmission members can move synchronously. Therefore, the second rotating shaft and the second rotating pin can move synchronously on the first side of the lifting member, to implement lifting balance between the first end and the second end of the lifting member on the first side. The second rotating shaft and the second rotating pin can move synchronously on the second side of the lifting member, to implement lifting balance between the first end and the second end of the lifting member on the second side.

In some possible implementations, the lifting mechanism has a retracted state and an extended state. In the retracted state, the lifting member is in an initial position relative to the base. In the extended state, the lifting member rises to an extended position relative to the base. An axis of the lifting member in the initial position coincides with an axis of the lifting member in the extended position.

In this implementation, the axis of the lifting member in the initial position coincides with the axis of the lifting member in the extended position, so that relative positions of the lifting member in the initial position and the extended position with the base have no deviation in a direction perpendicular to an optical axis of the lifting member. This can ensure that the optical axis of the lifting member has no deviation, thereby ensuring light quality of the camera module located in an internal space of the lifting member and ensuring image shooting quality of the camera apparatus.

In the retracted state, when the first segment of the short rod is subjected to a clockwise driving force, the first segment of the short rod can rotate clockwise and drive the second segment of the short rod to rotate clockwise. This drives the second end of the lifting member to rotate clockwise, to implement rising of the second end of the lifting member. In addition, the short rod drives, through the connecting rod, the first segment of the long rod to rotate clockwise, so that the first segment of the long rod drives the second segment of the long rod to rotate clockwise. This drives the first end of the lifting member to rotate clockwise, to implement rising of the first end of the lifting member, thereby implement rising of the entire the lifting member.

In the extended state, when the first segment of the short rod is subjected to a counterclockwise retracting force, the first segment of the short rod can rotate counterclockwise and drive the second segment of the short rod to rotate counterclockwise. This drives the second end of the lifting member to rotate counterclockwise, to implement falling of the second end of the lifting member. In addition, the short rod drives, through the connecting rod, the first segment of the long rod to rotate counterclockwise, so that the first segment of the long rod drives the second segment of the long rod to rotate counterclockwise. This drives the first end of the lifting member to rotate counterclockwise, to implement falling of the first end of the lifting member, thereby implementing falling of the entire lifting member.

In some possible implementations, a connection line between positions of the second end of the long rod in the retracted state and the extended state is parallel to an axial direction of the lifting member in the initial position.

In this implementation, when the lifting member extends from the initial position to the extended position, the lifting member does not rotate about the axis of the lifting member, so that the lifting member moves stably during switching between the extended state and the retracted state.

In some possible implementations, the first end of the long rod is provided with a first rotating hole, the long rod is rotatably connected to the first fastening part through the first rotating hole, the second end of the long rod is provided with a second rotating hole, and the long rod is rotatably connected to the first end of the lifting member through the second rotating hole. In the retracted state, the first rotating hole is closer to a top side of the lifting member than the second rotating hole.

The long rod may include a first rod, a second rod, and a third rod. The first rod, the second rod, and the third rod are sequentially connected in a direction from the first end to the second end of the long rod. The first end and the transition part of the long rod may be located on the first rod, and the second end of the long rod is located on the third rod. The first end of the long rod may be provided with the first rotating hole, the second end of the long rod may be provided with the second rotating hole, and the transition part may be provided with a third rotating hole.

In this implementation, because an axis of the first rotating hole is a center of rotation of the long rod, and a height of the first rod of the long rod is greater than a height of the third rod, the first rotating hole is positioned higher than the second rotating hole, so that in a process in which the connecting rod assembly drives the lifting member to rise, the third rod can move in a rising direction using a height of the first rod. In this way, when a moving stroke of the lifting member keeps unchanged, a size and space occupied by the lifting mechanism in a height direction can be reduced. This helps implement a light and thin design of the lifting mechanism.

A bottom side of the long rod is a plane. The height of the first rod is greater than that of the second rod, and a height of the second rod is greater than that of the third rod.

In this implementation, the height of the first pole is large, so that the transition part can provide a large mounting space.

In a direction from the first end of the long rod to the second end of the long rod, the height of the third rod gradually decreases, so that a surface on a top side of the third rod is an oblique surface. This reduces a height of the second end of the long rod, so that a weight of the long rod is reduced, thereby reducing power consumption for driving the long rod, and improving motion flexibility of the long rod.

The long support rod may be fastened between first rods of the two long rods, so that the long support rod is fastened at a position with highest structural strength that is of the long rod, thereby improving overall structural strength of the long balancing rod.

A height of the long support rod is less than that of the first rod, and the long support rod may be fastened to a part that is of the first rod and that is close to the bottom side, to form an accommodation space between the two first rods for mounting other components, thereby improving space utilization.

In some possible implementations, the lifting member is provided with a sliding slot, and the sliding slot is provided at the second end of the lifting member. The connecting rod assembly further includes a second rotating pin, the second rotating pin is fastened to or rotatably connected to the second rotating part, at least a part of the second rotating pin is located in the sliding slot, and the second rotating pin is slidable in an extension direction of the sliding slot.

In this implementation, a size of the sliding slot in the extension direction is set to be greater than an outer diameter of the second rotating pin, so that during lifting of the lifting member, the second rotating pin can move in the sliding slot in the extension direction of the sliding slot, to eliminate a motion deviation between the first end and the second end of the lifting member in height during lifting. This improves smoothness of a lifting motion of the lifting member.

A difference between the size of the sliding slot in the extension direction and the outer diameter of the second rotating pin ranges from 0 mm to 0.08 mm. For example, the difference may be, but is not limited to, 0.01 mm, 0.03 mm, 0.05 mm, 0.07 mm, 0.08 mm, or another value between 0.01 mm and 0.08 mm.

In some possible implementations, the sliding slot is a straight slot, and the extension direction of the sliding slot is perpendicular to the axis of the lifting member.

In this implementation, the sliding slot may be a straight slot, and the extension direction of the sliding slot is perpendicular to the axis of the lifting member. This helps keep heights of the first end and the second end of the lifting member consistent, so that lifting strokes of the first end and the second end of the lifting member are consistent, and stability of the lifting member is improved.

In some other possible implementations, the sliding slot may be alternatively an arc-shaped slot or a spline curve slot. Specifically, the sliding slot is designed based on a motion path of the second rotating pin during lifting of the lifting member, provided that the lifting strokes of the first end and the second end of the lifting member are consistent.

In some possible implementations, the lifting member is provided with a second avoidance groove, and the second avoidance groove is annularly located on an outer circumferential side of the lifting member.

In this implementation, the second avoidance groove is used to avoid another mechanical part, for example, a decoration member, during lifting of the lifting member. This avoids collision, damage, or an effect on lifting precision, to avoid collision of the lifting member during lifting.

The lifting member may include a first lifting barrel and a second lifting barrel. The first lifting barrel and the second lifting barrel are coaxially disposed and stacked in an axial direction of the lifting member. The lifting member may be provided with two first avoidance grooves, and the two first avoidance grooves are provided opposite to each other on a side surface of the first lifting barrel. The second avoidance groove is annularly located on an outer circumferential surface of the second lifting barrel. An opening of a first avoidance groove of the lifting member faces the long rod, and the first avoidance groove can accommodate a part of the long rod in the retracted state.

In this implementation, in the retracted state, because the lifting member can avoid the long rod through the first avoidance groove, the lifting member and the connecting rod assembly are arranged more compactly, so that a size of the lifting mechanism can be reduced. This helps implement a light and thin design of the electronic device.

In some possible implementations, the first rotating part and the third rotating part are located on a side that is of the second rotating part and that is away from the lifting member, and the third rotating part is located on a bottom side of the first rotating part. A connection line between the first rotating part and the third rotating part and a connection line between the second rotating part and the third rotating part are arranged in an included angle.

In this implementation, the connection line between the first rotating part and the third rotating part and the connection line between the second rotating part and the third rotating part are arranged in an included angle, to help the short rod meet a motion requirement and a space requirement of the four-connecting rod mechanism.

A value of the included angle ranges from 30° to 120°. For example, the included angle may be, but is not limited to, 30°, 50°, 70°, 90°, 110°, 120°, or another angle value between 30° and 120°.

In some possible implementations, the lifting mechanism further includes a drive assembly, the drive assembly is in transmission connection with the short support rod, and the drive assembly is configured to drive the short support rod, causing the short rod to move under force.

In this implementation, the drive assembly may apply a driving force to the short support rod, and drive the short support rod by using the driving force, to drive the short rod and the long rod, so that the short rod and the long rod jointly drive the lifting member to rise.

A point of action by the driving force on the short support rod is close to a bottom side of the short support rod, so that a force arm of the driving force is longer, thereby improving driving efficiency.

The drive assembly may apply a retracting force to the short support rod, and pull the short support rod by using the retracting force, to drive the short rod and the long rod, so that the short rod and the long rod jointly drive the lifting member to fall.

A point of action on the short support rod when the lifting member is driven to retract is the same as a point of action on the short support rod when the connecting rod assembly is driven to drive the lifting member to extend, so that the drive assembly drives the connecting rod assembly coherently, and the lifting member can be kept moving stably, thereby avoiding a deviation of the lifting member.

In some possible implementations, the lifting mechanism further includes a buffer assembly, the buffer assembly is connected between the short support rod and the drive assembly, and the buffer assembly is configured to allow a change in a relative position between the short support rod and the drive assembly.

In this implementation, the buffer assembly can provide a buffering effect for force transfer between the drive assembly and the connecting rod assembly. When the lifting mechanism is in the extended state, if the lifting member is retracted under external pressure, the buffer assembly can implement a force-bearing buffering function through deformation, to remove a part of the force applied to the lifting member, protect the lifting member, and reduce the force transferred to the drive assembly, thereby reducing damage to the drive assembly. In addition, after the external pressure on the lifting member is removed, the buffer assembly can further drive, by using a deformation restoring force, the lifting member to rise and restore to the extended state.

In some possible implementations, the short balancing rod further includes two limiting blocks, and the two limiting blocks are spaced apart on a side that is of the short support rod and that is away from the lifting member. The buffer assembly includes a buffer rod, a torsion spring, and a buffer rotating pin, the buffer rod is mounted between the two limiting blocks, the buffer rod is provided with an accommodating groove, an opening of the accommodating groove faces the short support rod, the torsion spring is accommodated in the accommodating groove, the buffer rotating pin extends through the limiting blocks, the torsion spring, and the buffer rod, and two pins of the torsion spring respectively abut against the short support rod and a bottom wall of the accommodating groove.

In this implementation, because the torsion spring is always in the compressed state, the torsion spring can keep specific rigidity. When the buffer rod further slowly compresses the torsion spring under force, the torsion spring can quickly restore to an initial state to drive the short balancing rod. Therefore, when the buffer rod slowly compresses the torsion spring under force, the buffer assembly and the short balancing rod may be considered as an integral part and move synchronously under force.

The buffer rod may be further provided with a baffle plate. The baffle plate is connected to the bottom wall of the accommodating groove and extends in a direction away from the accommodating groove.

In this implementation, the baffle plate can be disposed corresponding to a pin that is of the torsion spring and that is close to the bottom wall of the accommodating groove, thereby increasing a contact surface between the buffer rod and the pin of the torsion spring during rotation of the buffer rod toward the short support rod, helping drive the torsion spring to drive the short support rod, and improving force transmission efficiency.

In some possible implementations, the short balancing rod further includes a limiting rib, and the limiting rib is fastened to the limiting block and protrudes toward a direction away from the short support rod. Two support blocks respectively protrude from two ends of the buffer rod, and the two pins of the torsion spring elastically abut against the short support rod and the bottom wall of the accommodating groove respectively, to enable the two support blocks to respectively abut against two limiting ribs.

In this implementation, the torsion spring is in a compressed state. In this case, a force applied by the torsion spring to the short support rod is opposite in direction to a force causing the support block of the buffer rod to abut against the limiting rib of the short balancing rod, and a force applied by the torsion spring to the bottom wall of the accommodating groove of the buffer rod is opposite in direction to a force causing the limiting rib of the short balancing rod to abut against the support block of the buffer rod, so that acting forces between the buffer rod and the short balancing rod are balanced, allowing the buffer rod and the short balancing rod to keep relatively stationary when not subjected to external forces. This helps improve stability of a connection between the buffer rod and the short support rod, thereby improving transmission stability.

In this implementation, during falling of the lifting member, the drive assembly drives the buffer rod to rotate away from the short support rod, so that the buffer rod can abut against the limiting rib through the support block, and drive the short support rod to rotate, thereby driving the lifting member to fall. During falling of the lifting member, there is no need to rely on deformation and deformation restoration of the torsion spring for force transmission, increasing a transmission speed of the force during falling and helping rapid falling of the lifting member. In addition, the two pins of the torsion spring do not need to be stretched, so that stress fatigue of the torsion spring can be reduced, thereby improving a service life of the torsion spring.

In some possible implementations, the drive assembly includes a motor, a drive shaft, a crank, and a transmission rod, the motor is in transmission connection with the drive shaft, the drive shaft is fastened to a first end of the crank, a second end of the crank is rotatably connected to a first end of the transmission rod, and a second end of the transmission rod is rotatably connected to the buffer rod. The motor is configured to drive the crank to rotate, to drive the transmission rod to drive the buffer rod to rotate.

In this implementation, the motor may be directly connected to the crank, and is configured to drive the crank to rotate, thereby improving transmission efficiency.

The drive assembly may further include a gearbox, and the motor may be in transmission connection with the drive shaft through the gearbox.

In this implementation, the motor is in transmission connection with the drive shaft through the gearbox, so that a high rotational speed of the motor can be reduced to a proper rotational speed, and the rotational speed is output by the drive shaft, thereby improving rotational speed control over the drive shaft, and improving lifting stability of the lifting member.

In some possible implementations, when the lifting mechanism is in an extended state, an included angle α formed by a connection line between the first end of the transmission rod and the second end of the transmission rod and a connection line between the first end of the crank and the second end of the crank is 180°±10°.

In this implementation, the transmission rod and the crank are arranged at the included angle α. In this case, the transmission rod and the crank are at a dead point position of the mechanism, so that the transmission rod and the crank do not rotate relative to each other, and the transmission rod and the crank jointly form a support for the buffer rod. Therefore, the bottom wall of the accommodating groove of the buffer rod can form support for the torsion spring. The torsion spring is compressed under the effect of the pressure, and the transmission rod does not drive the crank 35 to rotate, so that the crank does not drive the motor to rotate, and the motor does not rotate passively, to protect the motor.

In addition, the lifting member can fall under pressure, and the torsion spring can absorb the pressure through deformation during this process to prevent impact damage to the lifting member. In addition, after the lifting member falls, the base can provide protection for the lifting member, to avoid further collision of the lifting member. In addition, upon removal of the pressure from the lifting member, a deformation restoring force of the torsion spring can drive the short rod and the long rod to rotate together, thereby restoring the lifting member to the extended state.

A value of the included angle α may be, but is not limited to, 170°, 175°, 180°, 185°, 190°, or another value between 170° and 190°, provided that the transmission rod and the crank can form the dead point of the mechanism in the extended state.

The pressure may result from the electronic device being dropped, impacting an external object, being squeezed, or the like.

In some possible implementations, the base is further provided with a drive fastening part, and the drive fastening part and the first fastening part are spaced apart.

The drive shaft includes an output shaft and a support shaft, the output shaft and the support shaft are coaxially disposed, one end of the output shaft is in transmission connection with the motor, the other end of the output shaft is fastened to the first end of the crank, one end of the support shaft is fastened to the first end of the crank, and the other end of the support shaft is rotatably connected to the drive fastening part.

In this implementation, the support shaft can improve mounting stability of the drive assembly, thereby improving transmission stability of the drive assembly. In addition, the support shaft can extend through the auxiliary fastening hole of the first fastening part of the base, thereby further improving mounting stability of the drive assembly.

In some possible implementations, a boss is disposed at a peripheral edge of the lifting member. The base is provided with an extended limiting table and a retracted limiting table that are disposed opposite to each other, and the boss is located between the extended limiting table and the retracted limiting table. When the lifting mechanism is in the extended state, the boss abuts against the extended limiting table. When the lifting mechanism is in the retracted state, the boss abuts against the retracted limiting table.

In this implementation, the retracted limiting table is disposed on the bottom side of the base, so that when the lifting member is switched from the extended state to the retracted state, a top side surface of the retracted limiting table can limit the lifting member, thereby preventing the lifting member from colliding with another component inside the electronic device due to excessive retraction. In addition, because the lifting member is in a retracted state in most cases, the retracted limiting table can form a support for the lifting member, to keep overall structural stability of the lifting mechanism.

In this implementation, the extended limiting table is disposed close to the top side of the base, so that when the lifting member is switched from the retracted state to the extended state, a bottom side surface of the extended limiting table can limit the lifting member, to avoid excessive extension of the lifting member, and ensure that the lifting member extends in a same size each time, thereby improving stability of the electronic device in a long-focus state.

A bottom wall of a sink groove is connected to the extended limiting table, so that the bottom wall of the sink groove can be connected to a side wall of the base through the extended limiting table, thereby improving structural strength of the bottom wall of the sink groove. The bottom wall of the sink groove is connected to the extended limiting table, so that an area limited by the extended limiting table is further increased. This helps limit the lifting member.

In some possible implementations, the lifting mechanism further includes a decoration member, the decoration member is mounted on the base, and the decoration member surrounds the lifting member and covers a gap between the lifting member and the base.

In this implementation, the decoration member covers the gap between the base and the lifting member, thereby serving to decorate and improve appearance. In addition, the decoration member can further prevent foreign matter, dust, and the like from entering the gap between the base and the lifting member, thereby implementing sealing and dustproof functions.

In some possible implementations, the lifting mechanism further includes a waterproof member, the waterproof member is mounted in the base, the waterproof member surrounds the lifting member, one end of the waterproof member is sealingly connected to the base, the other end of the waterproof member is sealingly connected to the lifting member, and the waterproof member is deformable as the lifting member rises and falls.

In this implementation, the waterproof member may be located in the gap between the lifting member and the base, so that a waterproof member can be blocked by the decoration member, thereby avoiding direct contact between the waterproof member and external air, slowing down oxidation and corrosion of the waterproof member, and improving a service life of the waterproof member.

In this implementation, the waterproof member is deformable, so that the waterproof member can move up and down together with the lifting member. In this way, during lifting of the lifting member, the waterproof assembly can cover the gap between the lifting member and the base, thereby implementing the waterproof and dustproof sealing functions of the lifting member during lifting.

The waterproof assembly may include a first waterproof ring, a second waterproof ring, and the waterproof member. The first waterproof ring and the second waterproof ring are connected to two ends of the waterproof member. The first waterproof ring is sleeved on the lifting member and fastened to a limiting surface. The second waterproof ring is fastened to the bottom wall of the sink groove. The waterproof member is also roughly annular or ring-shaped.

In this implementation, the first waterproof ring, the second waterproof ring, and the waterproof member are disposed to cover the gap between the lifting member and the base, thereby implementing waterproof and dustproof sealing functions, to protect an internal structure of the electronic device. During lifting, the lifting member can drive the first waterproof ring to move together through the limiting surface, and the first waterproof ring causes the waterproof member to deform.

According to a second aspect, this application further provides a camera apparatus, including a camera module and the lifting mechanism as described above, where the camera module is fastened to the lifting mechanism.

According to a third aspect, this application further provides an electronic device, including a housing and the camera apparatus as described above, where an aperture is provided on the housing, the camera apparatus is mounted in the housing, and a lifting member of a lifting mechanism of the camera apparatus is exposed from the aperture.

In this application, the lifting member in the lifting mechanism may rise to the extended position through an aperture of a camera decoration member, so that a height of an internal space of the lifting mechanism increases, to allow a lens of the camera module or a part of the lens to move in a direction away from a photosensitive element. This increases a distance between the lens or the part of the lens and the photosensitive element, and increases a shooting focal length, so that the electronic device can implement telephoto shooting, to improve a shooting effect. In addition, because the lifting member can extend through the aperture, a light entrance surface of the camera apparatus is made to protrude from the camera decoration member and a cover plate. This reduces light occlusion, helps increase light intake of the camera apparatus, and improves image shooting quality. The top side of the lifting member can transmit light and thus serve as the light entrance surface of the camera apparatus. After the shooting is completed, the lifting member may fall to the initial position, so that an overall thickness of the camera apparatus is reduced, and more parts of the lifting member are located in the internal space of the lifting mechanism, thereby helping protect the lifting member.

### BRIEF DESCRIPTION OF DRAWINGS

FIG. 1A is a diagram of a structure of an electronic device in some embodiments according to an embodiment of this application;
FIG. 1B is a diagram of a partial exploded structure of the electronic device shown in FIG. 1A;
FIG. 1C is a diagram of a structure in which a partial structure of a camera apparatus protrudes from the electronic device shown in FIG. 1A;
FIG. 2A is a diagram of a structure of a camera apparatus in the electronic device shown in FIG. 1A in some embodiments;
FIG. 2B is a diagram of a structure of the camera apparatus shown in FIG. 2A in some use states;
FIG. 3A is a diagram of a structure of a lifting mechanism shown in FIG. 2A in some embodiments;
FIG. 3B is a diagram of a structure of the lifting mechanism shown in FIG. 3A in some use states;
FIG. 4 is a diagram of a partial exploded structure of the lifting mechanism shown in FIG. 3A;
FIG. 5A is a diagram of a structure of a base in the lifting mechanism shown in FIG. 4 from another perspective;
FIG. 5B is a diagram of a structure of a lifting member in the lifting mechanism shown in FIG. 4 in some embodiments;
FIG. 6A is a diagram of a structure of a connecting rod assembly in the lifting mechanism shown in FIG. 4 in some embodiments;
FIG. 6B is a diagram of an exploded structure of the connecting rod assembly shown in FIG. 6A;
FIG. 7A is a diagram of a structure of a long balancing rod in the connecting rod assembly shown in FIG. 6B in some embodiments;
FIG. 7B is a diagram of a structure of a short balancing rod in the connecting rod assembly shown in FIG. 6B from another perspective;
FIG. 8A is a diagram of a connecting structure between a connecting rod assembly and a lifting member in the lifting mechanism shown in FIG. 3A;
FIG. 8B is a top view of the connecting rod assembly and the lifting member shown in FIG. 8A;
FIG. 9A is a diagram of a partial exploded structure of a group of transmission members in the connecting rod assembly and the lifting member shown in FIG. 8A;
FIG. 9B is a diagram of a partial exploded structure of another group of transmission members in the connecting rod assembly and the lifting member shown in FIG. 8A;
FIG. 10A is a side view of the lifting member mechanism shown in FIG. 3A;
FIG. 10B is a simplified diagram of the lifting mechanism shown in FIG. 10A;
FIG. 11 is a diagram of a connecting structure between the connecting rod assembly and the lifting member shown in FIG. 8A in some other states;
FIG. 12A is a side view of the lifting member mechanism shown in FIG. 3B;
FIG. 12B is a simplified diagram of the lifting mechanism shown in FIG. 12A;
FIG. 13 is a diagram of the lifting mechanism shown in FIG. 10A during lifting;
FIG. 14A is a diagram of a structure of a buffer assembly in the lifting mechanism shown in FIG. 4 in some embodiments;
FIG. 14B is a diagram of an exploded structure of the buffer assembly shown in FIG. 14A;
FIG. 14C is a diagram of a structure of the buffer assembly shown in FIG. 14A from another perspective;
FIG. 15A is a diagram of a structure of a drive assembly and a connecting rod assembly in the lifting mechanism shown in FIG. 3A in some embodiments;
FIG. 15B is a simplified diagram of the lifting mechanism shown in FIG. 15A;
FIG. 16A is a diagram of a structure of a drive assembly and a connecting rod assembly in the lifting mechanism shown in FIG. 3B in some embodiments;
FIG. 16B is a simplified diagram of the lifting mechanism shown in FIG. 16A;
FIG. 17A is a cross-sectional diagram of a structure of the lifting mechanism shown in FIG. 16A cut along an A-A position;
FIG. 17B is a diagram of a structure in which a lifting member in the lifting mechanism shown in FIG. 17A is retracted under force;
FIG. 17C is a simplified diagram of the lifting mechanism shown in FIG. 17B;
FIG. 18A is a cross-sectional diagram of a structure of the lifting mechanism shown in FIG. 3A cut along a B-B position;
FIG. 18B is a cross-sectional diagram of a structure of the lifting mechanism shown in FIG. 3B cut along a C-C position;
FIG. 19A is a diagram of a structure of the lifting mechanism shown in FIG. 3A from another perspective;
FIG. 19B is a cross-sectional diagram of a structure of the lifting mechanism shown in FIG. 3A cut along a D-D position;
FIG. 20 is a cross-sectional diagram of a structure of the lifting mechanism shown in FIG. 3B cut along an E-E position;
FIG. 21A is a diagram of a connecting structure between a connecting rod assembly and a lifting member in the lifting mechanism shown in FIG. 3A in some other embodiments; and
FIG. 21B is a diagram of a connecting structure between a connecting rod assembly and a lifting member in the lifting mechanism shown in FIG. 3B in some other embodiments.

### DESCRIPTION OF EMBODIMENTS

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a non-detachable connection, a direct connection, or an indirect connection through an intermediate medium. "A plurality of" means at least two.

Orientation terms mentioned in embodiments of this application, for example, "upper", "lower", "inner", "outer", "top", "bottom", and "side" are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, the orientation terms cannot be understood as a limitation on embodiments of this application.

In embodiments of this application, a limitation on a relative position relationship is mentioned, for example, parallel, perpendicular, or aligned. These limitations are all defined based on a current technique level, but are not absolutely strict limitations. A small deviation is allowed, and being roughly parallel, roughly perpendicular, roughly aligned, or the like is allowed. For example, A being parallel to B means A being parallel or roughly parallel to B, and an included angle of 0 degrees to 10 degrees between A and B being allowed. For example, A being perpendicular to B means A being perpendicular or roughly perpendicular to B, and an included angle of 80 degrees to 100 degrees between A and B being allowed.

In embodiments of this application, the terms "first", "second", "third", and "fourth" are merely intended for a purpose of description, and shall not be understood as an indication or implication of relative importance or an implicit indication of a quantity of indicated technical features. Therefore, a feature limited by "first", "second", "third", or "fourth" may explicitly or implicitly include one or more features.

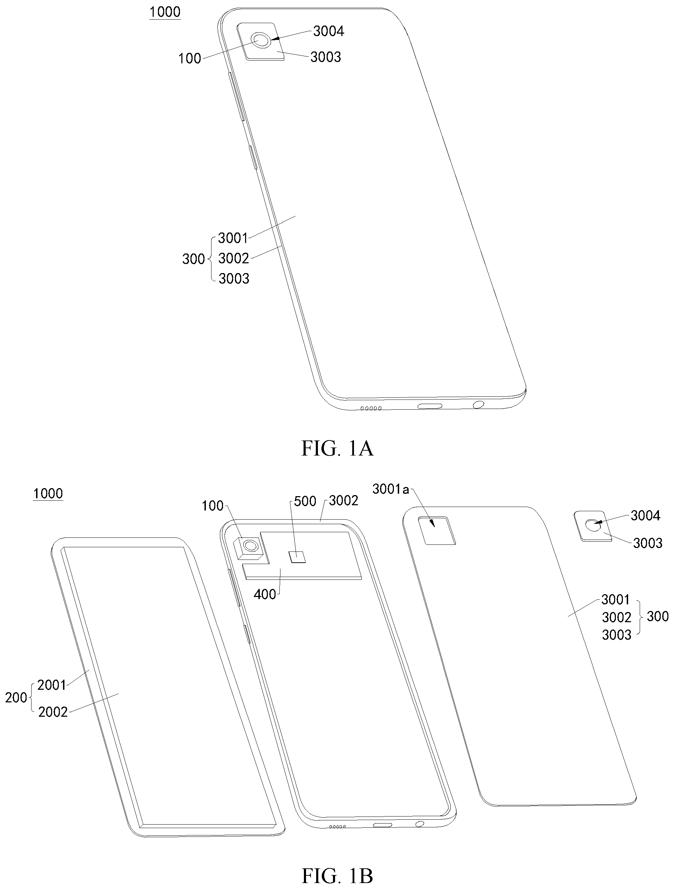

Refer to FIG. 1A and FIG. 1B. FIG. 1A is a diagram of a structure of an electronic device 1000 in some embodiments according to an embodiment of this application. FIG. 1B is a diagram of a partial exploded structure of the electronic device 1000 shown in FIG. 1A.

In some embodiments, the electronic device 1000 may be a device with an image shooting function, for example, a mobile phone, a tablet computer (tablet computer), a laptop computer (laptop computer), a smart screen, a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment of FIG. 1A, an example in which the electronic device 1000 is a mobile phone is used for description. Certainly, a similar structure may also be used for another type of electronic device 1000, and details are not described below.

It may be understood that FIG. 1A and FIG. 1B merely show examples of some components included in the electronic device 1000. Actual shapes, actual sizes, actual positions, and actual structures of these components are not limited by FIG. 1A and FIG. 1B. The electronic device 1000 may alternatively include more or fewer components than those shown in FIG. 1A and FIG. 1B.

In some embodiments, the electronic device 1000 may include a camera apparatus 100, a screen assembly 200, and a housing 300. The screen assembly 200 is configured to display an image, a video, or the like. The screen assembly 200 may include a light-transmitting panel 2001 and a display 2002. The light-transmitting panel 2001 and the display 2002 are stacked and fastened together. The light-transmitting panel 2001 is mainly configured to protect the display 2002 from dust. A material of the light-transmitting panel 2001 includes but is not limited to glass. The display 2002 may be a flexible display 2002 or a rigid display 2002. For example, the display 2002 may be an organic light-emitting diode (organic light-emitting diode, OLED) display, an active-matrix organic light-emitting diode (active-matrix organic light-emitting diode, AMOLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, a liquid crystal display (liquid crystal display, LCD), or the like.

For example, the housing 300 is configured to protect an internal electronic component of the electronic device 1000. The housing 300 may include a cover plate 3001, a side frame 3002, and a camera decoration member 3003. The cover plate 3001 is located on a side that is of the display 2002 and that is away from the light-transmitting panel 2001, and is stacked with the light-transmitting panel 2001 and the display 2002. The side frame 3002 is fastened to the cover plate 3001. For example, the side frame 3002 may be fastened to the cover plate 3001 by using an adhesive. Alternatively, the side frame 3002 and the cover plate 3001 may be an integrally formed structure, that is, the side frame 3002 and the cover plate 3001 are an integral structure. The side frame 3002 is located between the cover plate 3001 and the light-transmitting panel 2001. The light-transmitting panel 2001 may be fastened to the side frame 3002 by using an adhesive. The light-transmitting panel 2001, the cover plate 3001, and the side frame 3002 enclose an internal accommodation space of the electronic device 1000. The display 2002 is accommodated in the internal accommodation space. The cover plate 3001 may be made of a material like metal, plastic, or glass. The cover plate 3001 may be a plate body made of a single material, or a plate body structure made of a plurality of materials and formed by splicing a plurality of plates. A mounting opening 3001a is provided on the cover plate 3001, and the camera decoration member 3003 covers and is fastened to the mounting opening 3001a.

For example, the camera apparatus 100 is configured to take a photo/video. For example, the camera apparatus 100 is mounted in the housing 300, and is located in the internal accommodation space of the electronic device 1000. The camera apparatus 100 may be used as a rear-facing camera. For example, a light entrance surface of the camera apparatus 100 faces the camera decoration member 3003. The camera decoration member 3003 is configured to protect the camera apparatus 100.

In some embodiments, the camera decoration member 3003 protrudes to a side that is of the cover plate 3001 and that is away from the light-transmitting panel 2001. In this way, the camera decoration member 3003 can increase a mounting space 426 of the camera apparatus 100 in a thickness direction of the electronic device 1000. In some other embodiments, the camera decoration member 3003 may be alternatively flush with the cover plate 3001 or concave to the internal accommodation space of the electronic device 1000.

An aperture 3004 is provided on the camera decoration member 3003. The aperture 3004 allows scene light to enter the light entrance surface of the camera apparatus 100. In some other embodiments, the electronic device 1000 may alternatively not include the camera decoration member 3003. In this case, no mounting opening 3001a is provided on the cover plate 3001, but the aperture 3004 is provided on the cover plate 3001, and the aperture 3004 allows scene to enter the light entrance surface of the camera apparatus 100.

In some other embodiments, the camera apparatus 100 may be alternatively used as a front-facing camera. For example, the light entrance surface of the camera apparatus 100 faces the light-transmitting panel 2001. An optical path avoidance hole is provided on the display 2002. The optical path avoidance hole allows scene light to pass through the light-transmitting panel 2001 and then enter the light entrance surface of the camera apparatus 100. In some other embodiments, the electronic device 1000 may further include one or more other camera modules 20 (not shown in the figure). This is not strictly limited in embodiments of this application.

In some embodiments, as shown in FIG. 1B, the electronic device 1000 may further include a circuit board 400 and an image processor 500. The circuit board 400 and the image processor 500 are located in the internal accommodation space of the electronic device 1000. The image processor 500 is fastened to the circuit board 400 and is electrically connected to the circuit board 400. The image processor 500 is communicatively connected to the camera apparatus 100. The image processor 500 is configured to: obtain image data from the camera apparatus 100, and process the image data. The communication connection between the camera apparatus 100 and the image processor 500 may be for data transmission implemented through an electrical connection like cabling, or data transmission implemented through coupling. It may be understood that the camera apparatus 100 may be alternatively communicatively connected to the image processor 500 in another manner in which data transmission can be implemented.

In some embodiments, the electronic device 1000 may further include an analog-to-digital converter (also referred to as an A/D converter, not shown in the figure). The analog-to-digital converter is connected between the camera apparatus 100 and the image processor 500. The analog-to-digital converter is configured to: convert a signal generated by the camera apparatus 100 into a digital image signal and transmit the digital image signal to the image processor 500. Then the image processor 500 processes the digital image signal, and finally displays an image or a video on the screen assembly 200.

In some embodiments, the electronic device 1000 may further include a memory (not shown in the figure). The memory is communicatively connected to the image processor 500. The image processor 500 processes the digital image signal, and then transmits the image to the memory. In this way, when the image needs to be viewed subsequently, the image can be found from the memory at any time and displayed on the screen assembly 200. In some embodiments, the image processor 500 further compresses a processed digital image signal, and then stores a compressed digital image signal in the memory, to save a space of the memory.

In some other embodiments, the electronic device 1000 may alternatively not include the screen assembly 200.

It may be understood that a mounting position of the camera apparatus 100 of the electronic device 1000 in embodiments shown in FIG. 1A and FIG. 1B is merely an example. The mounting position of the camera apparatus 100 is not strictly limited in this application. In some other embodiments, the camera apparatus 100 may be alternatively mounted at another position of the electronic device 1000. For example, the camera apparatus 100 may be mounted in the upper middle or the upper right corner of the back of the electronic device 1000. In some other embodiments, the electronic device 1000 may include a terminal body and an auxiliary component that can rotate, move, or be detached relative to the terminal body, and the camera apparatus 100 may be alternatively disposed on the auxiliary component.

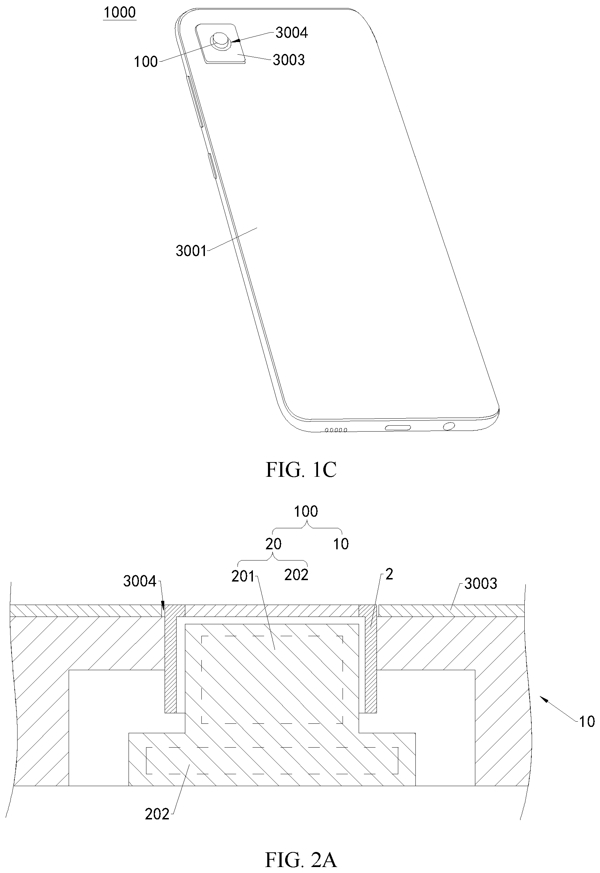

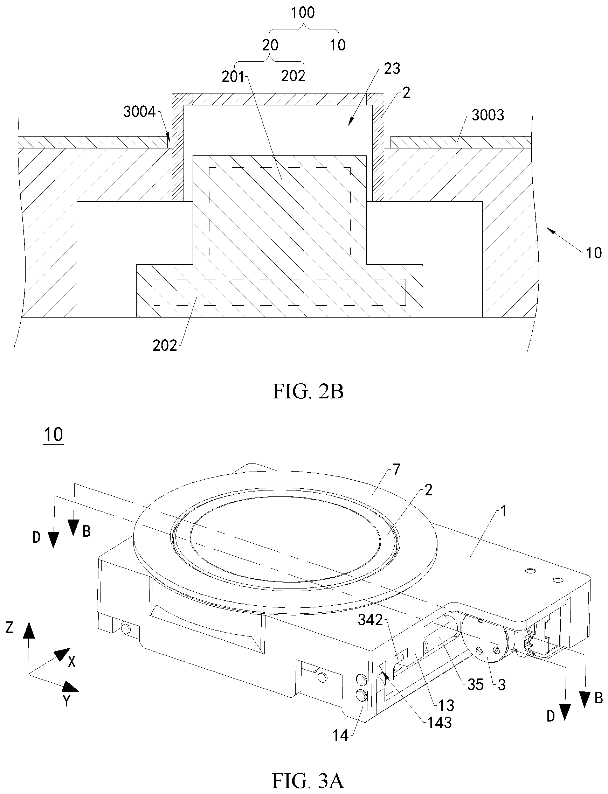

Refer to FIG. 1C to FIG. 2B. FIG. 1C is a diagram of a structure in which a partial structure of the camera apparatus 100 protrudes from the electronic device 1000 shown in FIG. 1A. FIG. 2A is a diagram of a structure of the camera apparatus 100 in the electronic device 1000 shown in FIG. 1A in some embodiments. FIG. 2B is a diagram of a structure of the camera apparatus 100 shown in FIG. 2A in some use states.

In some embodiments, the camera apparatus 100 may include a lifting mechanism 10 and a camera module 20. The lifting mechanism 10 is provided with a lifting member 2 capable of performing a lifting action. The lifting member 2 allows light to pass through. The camera module 20 may be mounted in an internal space of the lifting mechanism 10. The camera module 20 may include a lens 201 and a photosensitive element 202. The lens 201 and the photosensitive element 202 are spaced apart.

In this embodiment, the lifting member 2 in the lifting mechanism 10 may rise to an extended position through the aperture 3004 of the camera decoration member 3003, so that a height of the internal space of the lifting mechanism 10 increases, to allow the lens 201 of the camera module 20 or a part of the lens 201 to move in a direction away from the photosensitive element 202. This increases a distance between the lens 201 or the part of the lens 201 and the photosensitive element 202, and increases a shooting focal length, so that the electronic device 1000 can implement telephoto shooting, to improve a shooting effect. In addition, because the lifting member 2 can extend through the aperture 3004, the light entrance surface of the camera apparatus 100 is made to protrude from the camera decoration member 3003 and the cover plate 3001. This reduces light occlusion, helps increase light intake of the camera apparatus 100, and improves image shooting quality. A top side of the lifting member 2 can transmit light and thus serve as the light entrance surface of the camera apparatus 100.

After the shooting is completed, the lifting member 2 may fall to an initial position, so that an overall thickness of the camera apparatus 100 is reduced, and more parts of the lifting member 2 are located in the internal space of the lifting mechanism 10, thereby helping protect the lifting member 2.

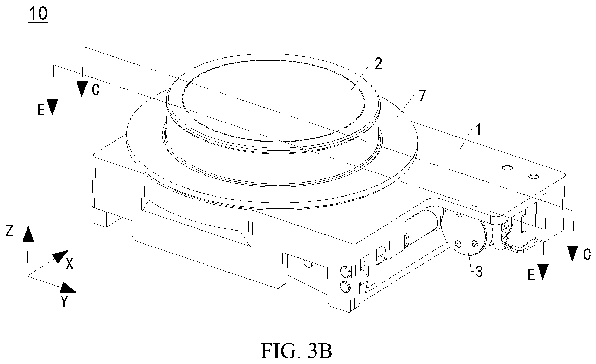

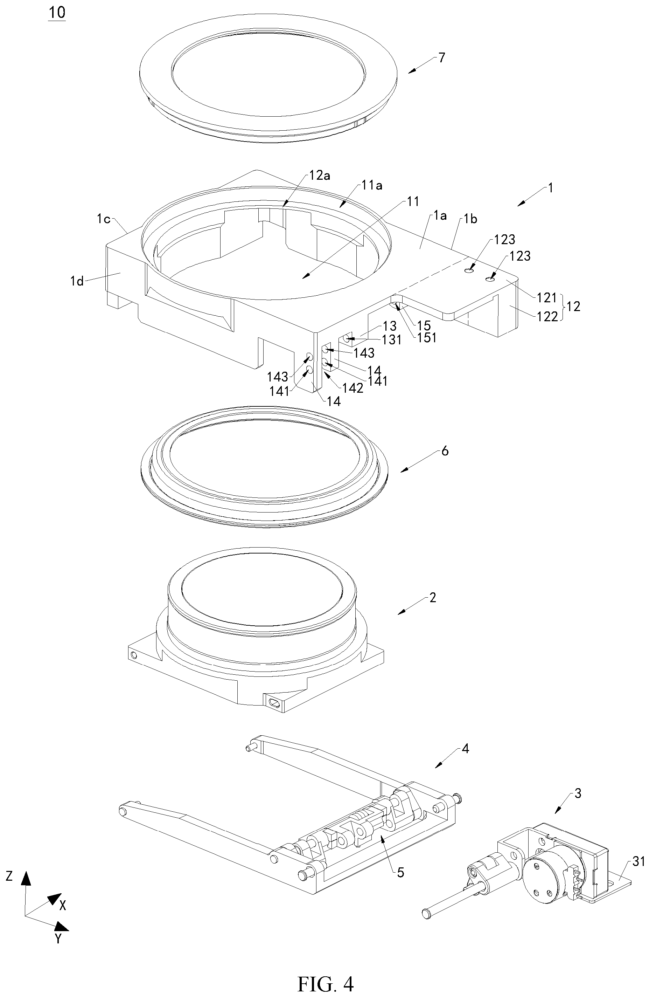

Refer to FIG. 3A to FIG. 4. FIG. 3A is a diagram of a structure of the lifting mechanism 10 shown in FIG. 2A in some embodiments. FIG. 3B is a diagram of a structure of the lifting mechanism 10 shown in FIG. 3A in some use states. FIG. 4 is a diagram of a partial exploded structure of the lifting mechanism 10 shown in FIG. 3A.

For ease of description, as defined in the following, the lifting mechanism 10 has a width direction X, a length direction Y, and a height direction Z, and the three directions are perpendicular to each other. When the lifting mechanism 10 is mounted in the electronic device 1000 along with the camera apparatus 100, a height direction of the lifting mechanism 10 may be parallel to the thickness direction of the electronic device 1000, that is, perpendicular to the cover plate and the screen assembly of the electronic device 1000. A light entrance side of the lifting mechanism 10 (namely, a side for light entrance) is a top side of the lifting mechanism 10, and a bottom side of the lifting mechanism 10 is opposite to the top side. When the camera apparatus 100 is used as a rear-facing camera, a side that is of the lifting mechanism 10 and that is close to the cover plate is the top side of the lifting mechanism 10, and a side that is of the lifting mechanism 10 and that is close to the screen assembly is the bottom side of the lifting mechanism 10. In the following related descriptions, in the lifting mechanism 10 and components and structures of the lifting mechanism, a part close to the light entrance side is a "top", and a part away from the light entrance side is a "bottom". In another implementation, a coordinate system of the lifting mechanism 10 may be flexibly set according to a specific actual requirement.

In some embodiments, the lifting mechanism 10 may include a base 1, the lifting member 2, and a drive assembly 3. The lifting member 2 is movably mounted on the base 1. The drive assembly 3 is accommodated in the base 1 and is mounted on the base 1. The drive assembly 3 is in transmission connection with the lifting member 2, and is configured to drive the lifting member 2 to rise or fall.

In this embodiment, the drive assembly 3 may drive the lifting member 2 to move relative to the base 1 in the Z direction and protrude from the base 1, so that the lifting member 2 rises. The drive assembly 3 may further drive the lifting member 2 to retract relative to the base 1 in a negative Z direction, so that the lifting member 2 falls.

A state of the lifting mechanism 10 shown in FIG. 3A is a retracted state, and a position of the lifting member 2 relative to the base 1 is the initial position. This corresponds to a state of the camera apparatus 100 shown in FIG. 1A and FIG. 2A. A state of the lifting mechanism 10 shown in FIG. 3B is an extended state, and a position of the lifting member 2 relative to the base 1 is an extended position. This corresponds to a state of the camera apparatus 100 shown in FIG. 1C and FIG. 2B.

In some embodiments, the lifting mechanism 10 may further include a connecting rod assembly 4, a buffer assembly 5, a waterproof assembly 6, and a decoration member 7.

For example, the connecting rod assembly 4 may be transmission connected between the lifting member 2 and the drive assembly 3, and the connecting rod assembly 4 is accommodated in the base 1 and is movably connected to the base 1. In this embodiment, under the drive of the drive assembly 3, the connecting rod assembly 4 can drive the lifting member 2 to move by using the base 1 as a fulcrum. This causes the lifting member 2 to rise or fall, thereby switching the lifting mechanism 10 between the extended state and the retracted state.

For example, the buffer assembly 5 is disposed on the connecting rod assembly 4, and the buffer assembly 5 is transmission connected between the drive assembly 3 and the connecting rod assembly 4. In this embodiment, the buffer assembly 5 can provide a buffering effect for force transfer between the drive assembly 3 and the connecting rod assembly 4. In this embodiment, when the lifting mechanism 10 is in the extended state, if the lifting member 2 is retracted under external pressure, the buffer assembly 5 can implement a force-bearing buffering function through deformation, to remove a part of the force applied to the lifting member 2, protect the lifting member 2, and reduce the force transferred to the drive assembly 3, thereby reducing damage to the drive assembly 3. In addition, after the external pressure on the lifting member 2 is removed, the buffer assembly 5 can further drive, by using a deformation restoring force, the lifting member 2 to rise and restore to the extended state.

For example, the waterproof assembly 6 may be disposed around the lifting member 2, and the waterproof assembly 6 is mounted between an inner wall of the base 1 and the lifting member 2. In this embodiment, the waterproof assembly 6 is configured to cover a gap between the lifting member 2 and the base 1, to implement waterproof and dustproof functions.

For example, the decoration member 7 is mounted on a top side of the base 1. The decoration member 7 surrounds the lifting member 2, and is configured to cover the gap between the lifting member 2 and the base 1, to implement a decoration function and improve an appearance. When the lifting mechanism 10 is mounted on the electronic device 1000, the decoration member 7 may be exposed through the aperture, or may be hidden below the camera decoration member or a rear cover.

It should be noted that the lifting mechanism 10 may further have more or fewer components than the foregoing content. This is not strictly limited in embodiments of this application.

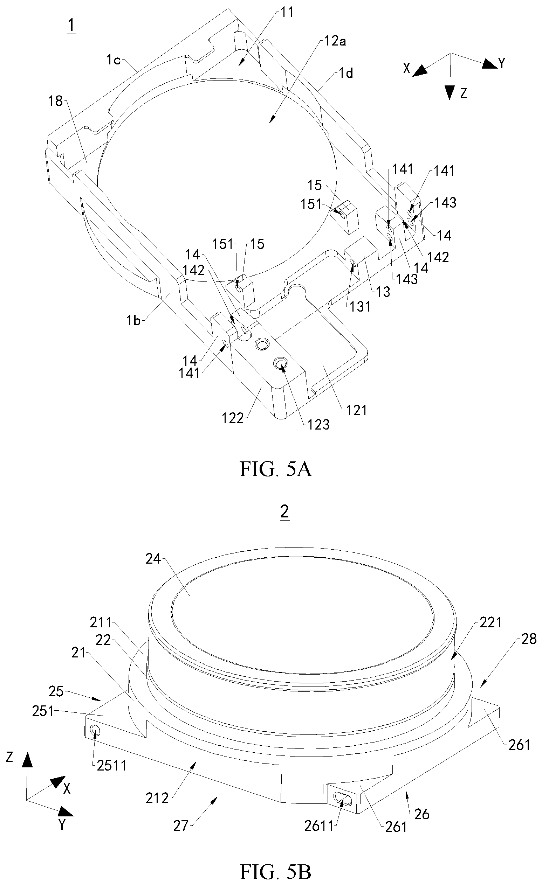

Refer to FIG. 4 and FIG. 5A. FIG. 5A is a diagram of a structure of the base 1 in the lifting mechanism 10 shown in FIG. 4 from another perspective.

In some embodiments, the base 1 may include a top wall 1a, a first side wall 1b, a second side wall 1c, and a third side wall 1d. The first side wall 1b, the second side wall 1c, and the third side wall 1d are located on a same side of the top wall 1a and are fastened to a peripheral edge of the top wall 1a. The first side wall 1b is opposite to the third side wall 1d, and the second side wall 1c is connected between two opposite ends of the first side wall 1b and the third side wall 1d. The first side wall 1b, the second side wall 1c, the third side wall 1d, and the top wall 1a jointly enclose an internal space 11 of the base 1. An opening is formed between ends that are of the first side wall 1b and the third side wall 1d and that are away from the second side wall 1c, and the opening communicates with the internal space 11. The top wall 1a is provided with a sink groove 11a and an accommodating hole 12a. The sink groove 11a, the accommodating hole 12a, and the internal space sequentially communicate in the negative Z direction.

For example, the base 1 may be provided with a drive mounting part 12. The drive mounting part 12 is disposed corresponding to the opening. The drive mounting part 12 may include a top plate 121 and a side plate 122. The side plate 122 is fastened to the top plate 121 and is bent relative to the top plate 121. The top plate 121 is connected to the top wall 1a, and extends from the top wall 1a in the Y direction. The side plate 122 is mounted on the first side wall 1b and extends in the Y direction.

The side plate 122 are fastened to a bottom side of the top plate 121, and a size of the side plate 122 in the X direction may be greater than that of the first side wall 1b, to implement a large plate thickness. The drive mounting part 12 may be provided with drive mounting holes 123, and the drive mounting holes 123 extend through a bottom side of the side plate 122 to a top side of the top plate 121. For a boundary between the top plate 121 and the top wall 1a and a boundary between the side plate 122 and the first side wall 1b, refer to dashed lines in FIG. 4 and FIG. 5A. In some other embodiments, a boundary between the top plate 121 and the top wall 1a and a boundary between the side plate 122 and the first side wall 1b may be alternatively at other positions. This is not limited in this application.

For example, the base 1 may be further provided with a drive fastening part 13. The drive fastening part 13 may include a bump, and the bump is fastened to a bottom side of the top wall 1a. The drive fastening part 13 may be provided with a drive fastening hole 131, and the drive fastening hole 131 extends through the bump in the X direction.

Refer to FIG. 3A, FIG. 4, and FIG. 5A. In some embodiments, a mounting plate 31 is disposed on a bottom side of the drive assembly 3, the mounting plate 31 of the drive assembly 3 is attached to the bottom side of the side plate 122, and a fastener extends through the mounting plate 31 and into the drive mounting hole 123 of the side plate 122, to fasten the mounting plate 31 to the base 1. The drive fastening part 13 is rotatably connected to a drive shaft 34 of the drive assembly 3 through the drive fastening hole 131, so that the drive shaft 34 can use the drive fastening part 13 as a fulcrum.

In this embodiment, the top plate 121 and the side plate 122 are in an inverted "L" structure, so that a top side of the drive assembly 3 can be mounted on the bottom side of the top plate 121, and a side surface that is of the drive assembly 3 and that faces the X direction can be mounted on the side plate 122. This increases a support area of the base 1 for the drive assembly 3, and helps improve mounting stability of the drive assembly 3. Because the size of the side plate 122 in the X direction may be greater than that of the first side wall 1b, stability of mounting the drive assembly 3 on the side plate 122 is improved.

With reference to FIG. 4 and FIG. 5A, in some embodiments, the base 1 may be provided with first fastening parts 14 and second fastening parts 15. The first fastening part 14 and the second fastening part 15 are spaced apart.

For example, the first fastening part 14 may include two first convex ribs, and the two first convex ribs are disposed opposite to each other. One first convex rib may be a part of the first side wall 1b, and is located at an end that is of the first side wall 1b and that is away from the second side wall 1c; and the other first convex rib may be a part of the third side wall 1d, and is located at an end that is of the first side wall 1b and that is away from the second side wall 1c. The first fastening part 14 is provided with a first fastening hole 141, and the first fastening hole 141 extends through the two first convex ribs in the X direction. In another embodiment, one first convex rib may be connected to the first side wall 1b, and the other first convex rib may be connected to the third side wall 1d.

For example, the first fastening part 14 may further include two auxiliary convex ribs, and the two auxiliary convex ribs are fastened to the bottom side of the top wall 1a. One auxiliary convex rib is disposed corresponding to one first convex rib, and the corresponding auxiliary convex rib and the first convex rib are spaced apart, to form an accommodating groove 142. The first fastening hole 141 further extends through the two auxiliary convex ribs in the X direction.

In some examples, the first fastening part 14 may be further provided with an auxiliary fastening hole 143, and the auxiliary fastening hole 143 and the drive fastening hole 131 are coaxially provided. In this embodiment, the auxiliary fastening hole 143 extends through the first convex rib and the auxiliary convex rib that are close to the third side wall 1d, so that the drive shaft 34 of the drive assembly 3 can sequentially extend through the drive fastening hole 131 and the auxiliary fastening hole 143. This allows the drive fastening part 13 and the first fastening part 14 to jointly mount the drive shaft 34 of the drive assembly 3, thereby improving mounting stability and helping improve stability of the drive assembly 3 driving the connecting rod assembly 4 through the drive shaft 34.

For example, the second fastening part 15 is fastened to the bottom side of the top wall 1a. The second fastening part 15 may include two second convex ribs spaced apart. The second fastening part 15 may be provided with a second fastening hole 151, and the second fastening hole 151 extends through the two second convex ribs in the X direction. The second fastening part 15 is located between the accommodating hole 12a of the base 1 and the first fastening part 14.

FIG. 5B is a diagram of a structure of the lifting member 2 in the lifting mechanism 10 shown in FIG. 4 in some embodiments.

In some embodiments, the lifting member 2 may include a first lifting barrel 21 and a second lifting barrel 22. An axial direction of the lifting member 2 is parallel to the Z direction. The first lifting barrel 21 and the second lifting barrel 22 are coaxially disposed and stacked in the axial direction of the lifting member 2. An internal space of the first lifting barrel 21 communicates with an internal space of the second lifting barrel 22, to jointly form an internal space 23 of the lifting member 2 (refer to FIG. 2B). The internal space 23 of the lifting member 2 can be used to accommodate at least a part of the camera module 20.

For example, the second lifting barrel 22 is located on a top side of the first lifting barrel 21, and an outer diameter of the second lifting barrel 22 is less than an outer diameter of the first lifting barrel 21. The first lifting barrel 21 has a limiting surface 211 that surrounds the second lifting barrel 22 and faces the second lifting barrel 22.

The lifting member 2 may be provided with two first avoidance grooves 212, and the two first avoidance grooves 212 are provided opposite to each other on a side surface of the first lifting barrel 21 in the X direction. The lifting member 2 may be provided with a second avoidance groove 221, and the second avoidance groove 221 is annularly located on an outer circumferential surface of the second lifting barrel 22.

For example, the lifting member 2 may further include a light-transmitting member 24, and the light-transmitting member 24 may be a light-transmitting lens, a light-transmitting film, or the like. The light-transmitting member 24 is mounted on the top side of the lifting member 2, so that light can pass through the light-transmitting member 24 from the top side of the lifting member 2 to enter the internal space of the lifting member 2. In this case, the camera module 20 may collect light that enters the internal space 23 of the lifting member 2, to implement shooting.

In some embodiments, the lifting member 2 may include a first end 25 and a second end 26 that are opposite to each other, and the first end and the second end may be arranged in the Y direction. The lifting member 2 may include a first side 27 and a second side 28 that are opposite to each other, and the first side 27 and the second side 28 may be arranged in the X direction.

For example, two first bosses 251 and two second bosses 261 may be disposed on a peripheral edge of a bottom side of the lifting member 2. The two first bosses 251 are located at the first end 25 of the lifting member 2, one first boss 251 is located on the first side 27 of the lifting member 2, and the other first boss 251 is located on the second side 28 of the lifting member 2. The two second bosses 261 are located at the second end 26 of the lifting member 2, one second boss 261 is located on the first side 27 of the lifting member 2, and the other second boss 261 is located on the second side 28 of the lifting member 2.

The first boss 251 is provided with a mating hole 2511, and the second boss 261 is provided with a sliding slot 2611. In some other embodiments, the mating hole 2511 and the sliding slot 2611 may be alternatively provided at other positions of the lifting member 2.

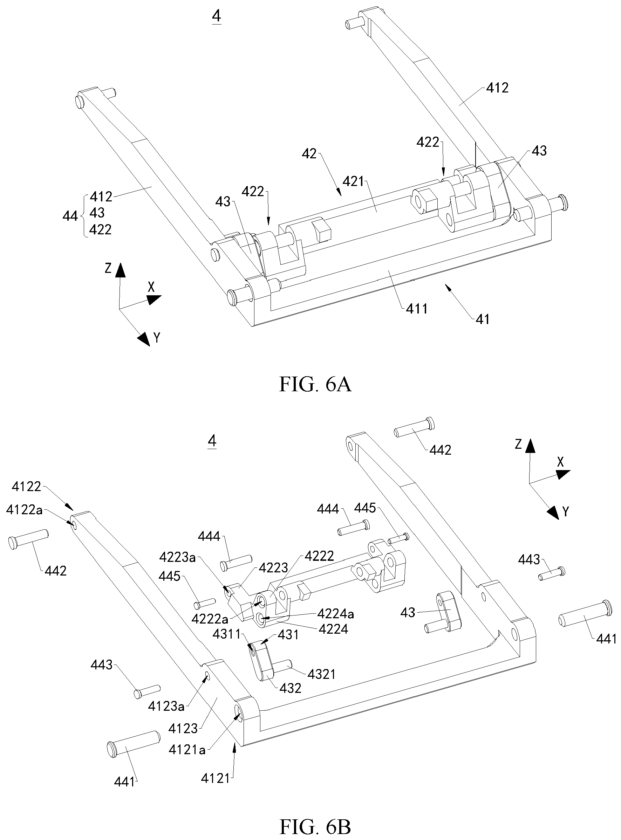

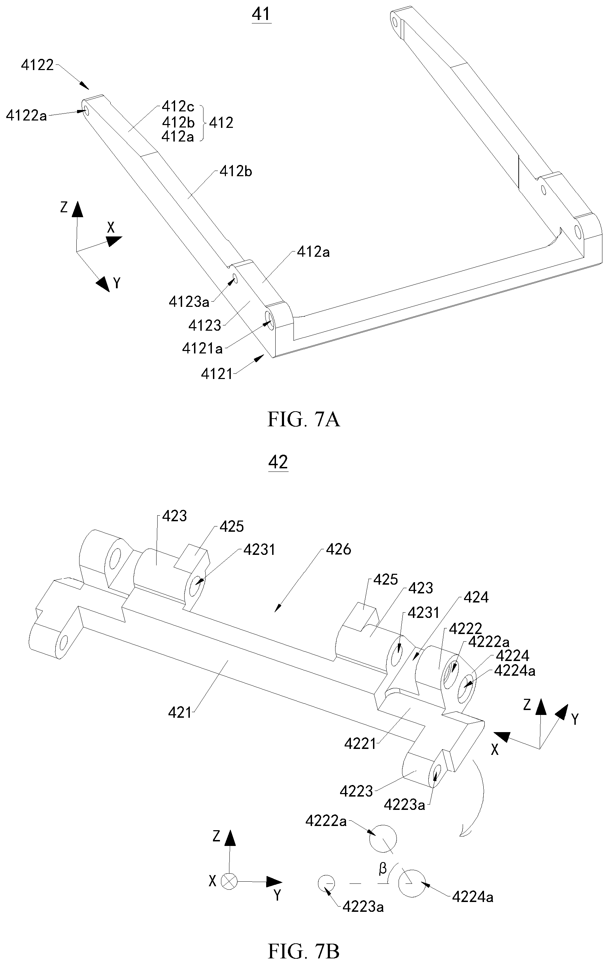

Refer to FIG. 6A and FIG. 6B. FIG. 6A is a diagram of a structure of the connecting rod assembly 4 in the lifting mechanism 10 shown in FIG. 4 in some embodiments. FIG. 6B is a diagram of an exploded structure of the connecting rod assembly 4 shown in FIG. 6A. FIG. 7A is a diagram of a structure of a long balancing rod 41 in the connecting rod assembly 4 shown in FIG. 6B in some embodiments.

In some embodiments, the connecting rod assembly 4 may include the long balancing rod 41, a short balancing rod 42, and two connecting rods 43.

The long balancing rod 41 may include a long support rod 411 and two long rods 412, and the two long rods 412 are disposed opposite to each other. The two long rods 412 are respectively fastened to two ends of the long support rod 411. The short balancing rod 42 is located between the two long rods 412. The short balancing rod 42 includes a short support rod 421 and two short rods 422. The two short rods 422 are disposed opposite to each other and are respectively connected to two ends of the short support rod 421. One connecting rod 43 is disposed corresponding to one long rod 412 and one short rod 422, and the connecting rod 43 is rotatably connected between the corresponding long rod 412 and the corresponding short rod 422.

In this embodiment, one long rod 412, one connecting rod 43, and one short rod 422 can form a group of transmission members 44, two groups of transmission members 44 may be symmetrically disposed, and the two groups of transmission members 44 are connected through the long support rod 411 and the short support rod 421, thereby improving transmission smoothness of the connecting rod assembly 4.

Refer to FIG. 7A. In some embodiments, the long rod 412 may include a first end 4121, a second end 4122, and a transition part 4123, and the transition part 4123 is located between the first end 4121 of the long rod 412 and the second end 4122 of the long rod 412. The long rod 412 may include a first rod 412a, a second rod 412b, and a third rod 412c that are sequentially connected in the Y direction. The first end 4121 and the transition part 4123 may be located on the first rod 412a, and the second end 4122 is located on the third rod 412c. The first end 4121 of the long rod 412 may be provided with a first rotating hole 4121a, the second end 4122 of the long rod 412 may be provided with a second rotating hole 4122a, and the transition part 4123 may be provided with a third rotating hole 4123a.

For example, a bottom side of the long rod 412 is a plane. In the Z direction, a height of the first rod 412a is greater than that of the second rod 412b, and a height of the second rod 412b is greater than that of the third rod 412c. In this embodiment, due to a great height of the first rod 412a, the transition part 4123 can provide a large mounting space in the Z direction. In another embodiment, the transition part 4123 may be alternatively located at the second rod 412b or a joint between the first rod 412a and the second rod 412b.

The first rotating hole 4121a and the third rotating hole 4123a are farther away from the bottom side of the long rod 412 than the second rotating hole 4122a. In this case, in the Z direction, the first rotating hole 4121a and the third rotating hole 4123a are positioned higher than the second rotating hole 4122a.

In a direction from the first end 4121 of the long rod 412 to the second end 4122 of the long rod 412, a height of the third rod 412c in the Z direction gradually decreases, so that a surface of a top side of the third rod 412c is inclined, thereby reducing a size of the second end 4122 of the long rod 412 in the Z direction.

The long support rod 411 may be fastened between first rods 412a of the two long rods 412, so that the long support rod 411 is fastened at a position with highest structural strength that is of the long rod 412, thereby improving overall structural strength of the long balancing rod 41.

In the Z direction, a height of the long support rod 411 is less than that of the first rod 412a, and the long support rod 411 may be fastened to a part that is of the first rod 412a and that is close to the bottom side, to form an accommodation space between the two first rods 412a for mounting other components, thereby improving space utilization.

FIG. 7B is a diagram of a structure of the short balancing rod 42 in the connecting rod assembly 4 shown in FIG. 6B from another perspective.

In some embodiments, the short rod 422 may include a rod body 4221, a first rotating part 4222, a second rotating part 4223, and a third rotating part 4224. The first rotating part 4222, the second rotating part 4223, and the third rotating part 4224 are all fastened to the rod body 4221, to implement mutual fastening.

For example, the second rotating part 4223 protrudes from one side of the rod body 4221 in the -Y direction, and the first rotating part 4222 and the third rotating part 4224 protrude from the other side of the rod body 4221 in the -Y direction. The rod body 4221 may have an end face, and the end face and the first rotating part 4222 are spaced apart in the X direction.

The first rotating part 4222 may be provided with a first rotating hole 4222a, the second rotating part 4223 may be provided with a second rotating hole 4223a, and the third rotating part 4224 may be provided with a third rotating hole 4224a.

The first rotating part 4222 and the third rotating part 4224 are stacked, and the first rotating part 4222 is located on a top side of the third rotating part 4224. On a YZ plane, a connection line between an axis center of the first rotating hole 4222a and an axis center of the third rotating hole 4224a forms an included angle with a connection line between an axis center of the second rotating hole 4223a and the axis center of the third rotating hole 4224a (refer to β in FIG. 7B).

A value of the included angle β ranges from 30° to 120°. For example, the included angle may be, but is not limited to, 30°, 50°, 70°, 90°, 110°, 120°, or another angle value between 30° and 120°.

Two second rotating parts 4223 are spaced apart, and an accommodation space 4225 is formed between the two second rotating parts 4223.

For example, the short balancing rod 42 may further include two limiting blocks 423, and the two limiting blocks 423 are spaced apart on a side that is of the short support rod 421 and that is away from the second rotating part 4223, so that the two limiting blocks 423 face the Y direction.

The limiting block 423 and the first rotating part 4222 are spaced apart, and a gap between the limiting block 423 and the first rotating part 4222 forms a limiting slot 424. The limiting block 423 may be provided with a fourth rotating hole 4231, and the fourth rotating hole 4231 and the first rotating hole 4222a may be coaxially provided.

The short balancing rod 42 further includes limiting ribs 425, and the limiting rib 425 is connected to a side that is of the limiting block 423 and that is away from the short support rod 421, so that the limiting rib 425 protrudes from the limiting block 423 in the Y direction.

The mounting space 426 is formed between the two third rotating parts 4224 of the short balancing rod 42. The mounting space 426 includes a space between the two limiting blocks 423, and the mounting space 426 is used to mount other components.

Refer to FIG. 6B. In some embodiments, the connecting rod 43 may include a first end 431 and a second end 432. The first end 431 of the connecting rod 43 may be provided with a transition hole 4311. The second end 432 of the connecting rod 43 may be provided with a transition pin 4321.

Refer to FIG. 6A to FIG. 7B. In some embodiments, the short balancing rod 42 may be disposed between the two long rods 412. The connecting rod 43 is rotatably connected between the long rod 412 and the short rod 422. The first end 431 of the connecting rod 43 is rotatably connected to the transition part 4123 of the long rod 412, and the second end 432 of the connecting rod 43 is rotatably connected to the third rotating part 4224 of the short rod 422.

In this embodiment, the short balancing rod 42 can drive the short rod 422 to move together under force, and drive the long rod 412 to move together through the connecting rod 43, so that the long rod 412 and the short rod 422 move synchronously.

For example, the transition pin 4321 of the connecting rod 43 may extend through the third rotating hole 4224a of the third rotating part 4224 of the short rod 422, so that the second end 432 of the connecting rod 43 is rotatably connected to the short rod 422. The transition hole 4311 of the connecting rod 43 and the third rotating hole 4123a of the transition part 4123 of the long rod 412 are coaxially provided. The transmission member 44 may further include a plurality of rotating shafts, and one of the plurality of rotating shafts extends through the third rotating hole 4123a and into the transition hole 4311, so that the first end 431 of the connecting rod 43 is rotatably connected to the long rod 412. In some other embodiments, a third rotating shaft 443 may be fastened to the first end 431 of the connecting rod 43, and the transition pin 4321 may be detachably connected to the second end 432 of the connecting rod 43.

The transmission member 44 may further include a first rotating shaft 441, a second rotating shaft 442, the third rotating shaft 443, a first rotating pin 444, and a second rotating pin 445. The first rotating shaft 441 may extend through the first rotating hole 4121a. The second rotating shaft 442 may extend through the second rotating hole 4122a. The third rotating shaft 443 may extend through the third rotating hole 4123a and into the transition hole 4311. The first rotating pin 444 may extend through the first rotating hole 4222a of the first rotating part 4222. The second rotating pin 445 may extend through the second rotating hole 4223a of the second rotating part 4223.

A region in which an end face of the rod body 4221 of the short rod 422 and the first rotating part 4222 are spaced apart can accommodate the connecting rod 43, and provide a space for the connecting rod 43.

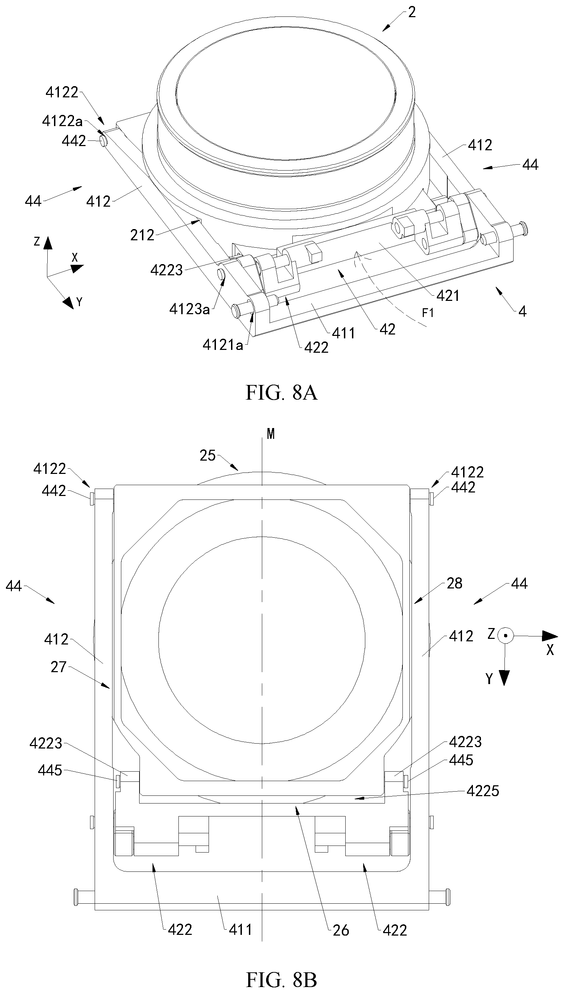

Refer to FIG. 5B, FIG. 8A, and FIG. 8B. FIG. 8A is a diagram of a connecting structure between the connecting rod assembly 4 and the lifting member 2 in the lifting mechanism 10 shown in FIG. 3A. FIG. 8B is a top view of the connecting rod assembly 4 and the lifting member 2 shown in FIG. 8A.

In some embodiments, the lifting member 2 may be located between the two long rods 412, and the short balancing rod 42 may be located between the lifting member 2 and the long support rod 411.

For example, the first end 25 of the lifting member 2 is connected between the second ends 4122 of the two long rods 412, and the second end 26 of the lifting member 2 is connected between the two short rods 422.

One mating hole 2511 of the lifting member 2 is provided corresponding to the second end 4122 of one long rod 412 in a group of transmission members 44 and one second rotating shaft 442, and one sliding slot 2611 of the lifting member 2 is provided corresponding to the second rotating part 4223 of one short rod 422 in the group of transmission members 44 and one second rotating pin 445. The second rotating shaft 442 extends through the second rotating hole 4122a of the long rod 412 and into the mating hole 2511 of the lifting member 2, so that the second end 4122 of the long rod 412 is rotatably connected to the first end 25 of the lifting member 2. The second rotating pin 445 extends through the second rotating hole 4223a of the second rotating part 4223 of the short rod 422, and is at least partially located in the sliding slot 2611, so that the second rotating pin 445 is slidably connected to the second end 26 of the lifting member 2. In this embodiment, the connecting rod assembly 4 can move under the drive of the drive assembly, and drive the first end 25 and the second end 26 of the lifting member 2 to move.

For example, an opening of the first avoidance groove 212 of the lifting member 2 faces the long rod 412, and the first avoidance groove 212 can accommodate a part of the long rod 412 in the retracted state. In this embodiment, in the retracted state, because the lifting member 2 can avoid the long rod 412 through the first avoidance groove 212, the lifting member 2 and the connecting rod assembly 4 are arranged more compactly, so that a size of the lifting mechanism 10 in the Z direction can be reduced. This helps implement a light and thin design of the electronic device 1000.

For example, the accommodation space 4225 formed between the two second rotating parts 4223 of the short balancing rod 42 can accommodate at least a part of the second end 26 of the lifting member 2, to implement a more stable rotating connection between the short balancing rod 42 and the second end 26 of the lifting member 2.

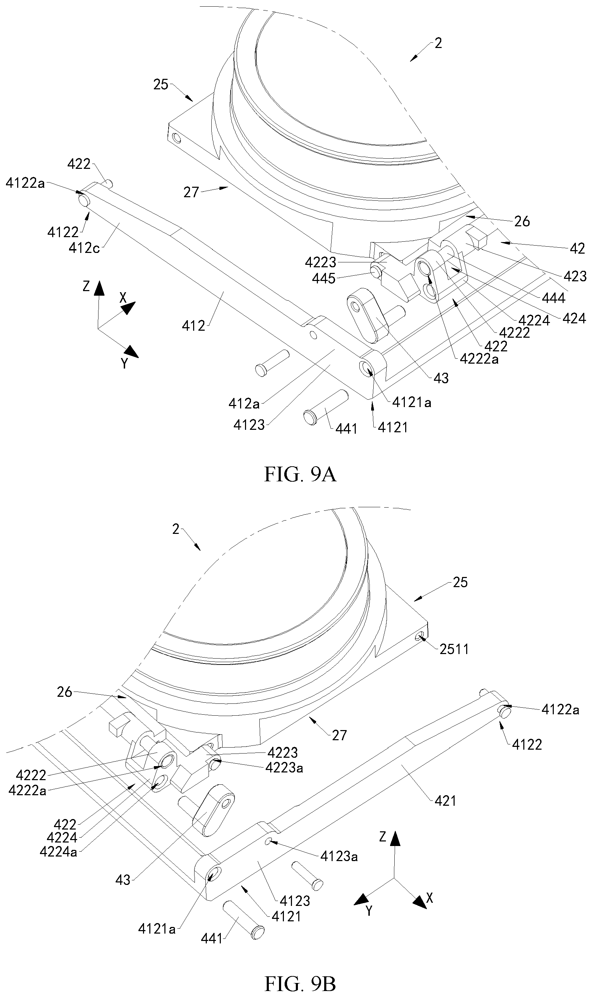

Refer to FIG. 8B to FIG. 9B. FIG. 9A is a diagram of a partial exploded structure of a group of transmission members 44 in the connecting rod assembly 4 and the lifting member 2 shown in FIG. 8A. FIG. 9B is a diagram of a partial exploded structure of another group of transmission members 44 in the connecting rod assembly 4 and the lifting member 2 shown in FIG. 8A.

In some embodiments, the two groups of transmission members 44 may be symmetrically connected to the first side 27 of the lifting member 2 and the second side 28 of the lifting member 2. The lifting member 2 has a symmetric surface (refer to M in FIG. 8B) that extends through an axis and is parallel to an XY plane, and the two groups of transmission members 44 are symmetrical with respect to the symmetric surface M.

In this embodiment, the two long rods 412 are fastened through the long support rod 411, so that two second rotating shafts 442 rotatably connected to two sides of the first end 25 of the lifting member 2 are located on the long balancing rod 41. In this way, the two second rotating shafts 442 can move synchronously, thereby implementing lifting balance between the first side 27 and the second side 28 of the lifting member 2 on the first end 25, and improving lifting smoothness of the lifting member 2. The two short rods 422 are fastened through the short support rod 421, so that two second rotating pins 445 slidably connected to two sides of the second end 26 of the lifting member 2 are located on the short balancing rod 42. In this way, the two second rotating pins 445 can move synchronously, thereby implementing lifting balance between the first side 27 and the second side 28 of the lifting member 2 on the second end.

In this embodiment, in each group of transmission members 44, the connecting rod 43 is correspondingly rotatably connected to one long rod 412 and one short rod 422, so that the long rod 412 and the short rod 422 in each group of transmission members 44 can move synchronously. Therefore, the second rotating shaft 442 and the second rotating pin 445 can move synchronously on the first side 27 of the lifting member 2, to implement lifting balance between the first end 25 and the second end 26 of the lifting member 2 on the first side 27. The second rotating shaft 442 and the second rotating pin 445 can move synchronously on the second side 28 of the lifting member 2, to implement lifting balance between the first end 25 and the second end 26 of the lifting member 2 on the second side 28.

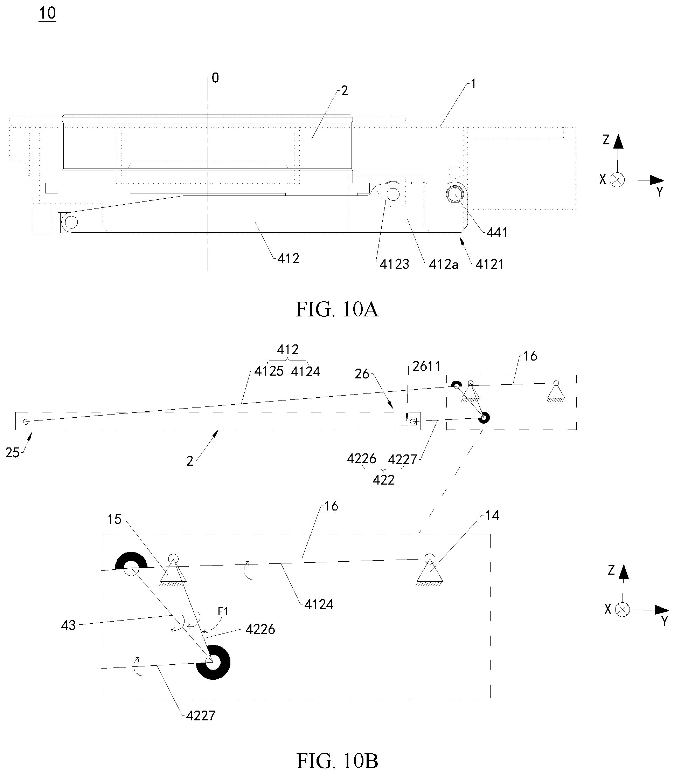

Refer to FIG. 5A, FIG. 9A, and FIG. 10A. FIG. 10A is a side view of the lifting member 2 mechanism shown in FIG. 3A. Dotted lines in FIG. 10A represent the base 1.

In some embodiments, the first end 4121 of the long rod 412 is rotatably connected to the first fastening part 14 of the base 1, and the first rotating part 4222 of the short rod 422 is rotatably connected to the second fastening part 15 of the base 1.

For example, the first rotating shaft 441 extends through the first rotating hole 4121a of the long rod 412 and into the first fastening hole 141 of the first fastening part 14. The first rotating pin 444 extends through the first rotating hole 4222a of the first rotating part 4222 of the short rod 422 and into the second fastening hole 151 of the second fastening part 15.

In this embodiment, the long rod 412 and the short rod 422 are rotatably connected to the base 1, so that the long rod 412 and the short rod 422 can simultaneously drive the lifting member 2 to rise and fall in the Z direction relative to the base 1. Therefore, when the short rod 422 is subjected to a force, the short rod 422 rotates about the axis of the first rotating pin 444 as a center of rotation, and drives, through the second rotating part 4223, the second end 26 of the lifting member 2 to move, so that the second end 26 of the lifting member 2 is displaced in the Z direction. In addition, the short rod 422 further drives, through the third rotating part 4224, the long rod 412 to rotate about an axis of the first rotating shaft 441 as a center of rotation, so that the second end 4122 of the long rod 412 drives the first end 25 of the lifting member 2 to move, to cause the first end 25 of the lifting member 2 to displace in the Z direction, thereby implementing simultaneous displacement of the first end 25 of the lifting member 2 and the second end 26 of the lifting member 2 in the Z direction, and thus implementing switching of the lifting mechanism 10 between the extended state and the retracted state.

Because a height of the first rod 412a in the Z direction is the largest, and the first end 4121 and the transition part 4123 of the long rod 412 are both located on the first rod 412a, the first rod 412a can provide higher structural strength, to support a rotating connection between the first end 4121 of the long rod 412 and the base 1, and support a rotating connection between the transition part 4123 and the connecting rod 43. This improves stability of the long rod 412 rotating relative to the base 1 and the connecting rod 43.

The first end 4121 of the long rod 412 is disposed in the accommodating groove 142 of the first fastening part 14 of the base 1, and an axis of the first rotating hole 4121a of the long rod 412 coincides with an axis of the first fastening hole 141 of the first fastening part 14, thereby improving stability of a rotating connection between the long rod 412 and the base 1.

The second fastening part 15 of the base 1 is disposed in the limiting slot 424 between the limiting block 423 of the short balancing rod 42 and the first rotating part 4222 of the short rod 422, and an axis of the second fastening hole 151 of the second fastening part 15 coincides with an axis of the first rotating hole 4222a of the first rotating part 4222, thereby improving stability of a rotating connection between the short rod 422 and the base 1.

Refer to FIG. 8A, FIG. 9B, and FIG. 10B. FIG. 10B is a simplified diagram of the lifting mechanism 10 shown in FIG. 10A. Dashed lines with arrows in FIG. 10B represent a rotation direction.

For ease of description in the following, in the simplified diagram, hollow circles represent rotatable components in the lifting mechanism 10, straight lines represent components in the lifting mechanism 10 that can rotate about the hollow circles as centers of rotation, two straight lines connected by a solid sector are fastened, triangles with oblique planes at bottom sides represent a fixed point position, and no motion interference exists between intersecting straight lines.

In some embodiments, on the YZ plane, a part between the first fastening part 14 and the second fastening part 15 of the base 1 may be considered as a fastening rod 16 of the base 1. The long rod 412 may include a first segment 4124 and a second segment 4125 that are fastened. The first segment 4124 of the long rod 412 is a connection line between a center of the first rotating hole 4121a and a center of the third rotating hole 4123a. The second segment 4125 of the long rod 412 is a connection line between the center of the third rotating hole 4123a and a center of the second rotating hole 4122a of the long rod 412. The short rod 422 may include a first segment 4226 and a second segment 4227 that are fastened. The first segment 4226 of the short rod 422 is a connection line between a center of the first rotating hole 4222a of the first rotating part 4222 and a center of the third rotating hole 4224a of the third rotating part 4224. The second segment 4227 of the short rod 422 is a connection line between the center of the third rotating hole 4224a and a center of the second rotating hole 4223a of the second rotating part 4223.

In this embodiment, the fastening rod 16, the first segment 4124 of the long rod 412, the connecting rod 43, and the first segment 4226 of the short rod 422 are sequentially rotatably connected from end to end, to form a four-connecting rod mechanism. The second segment 4125 of the long rod 412 and the second segment 4227 of the short rod 422 can rise and fall together with a motion of the four-connecting rod mechanism, and the four-connecting rod mechanism improves retraction smoothness of the lifting mechanism 10.

One end that is of the second segment 4125 of the long rod 412 and that is away from the first segment 4124 of the long rod 412 is rotatably connected to the mating hole 2511 of the first end 25 of the lifting member 2, and one end that is of the second segment 4227 of the short rod 422 and that is away from the first segment 4226 of the short rod 422 is slidably connected to the sliding slot 2611 of the second end 26 of the lifting member 2. Therefore, during motion of the four-connecting rod mechanism, the second segment 4125 of the long rod 412 and the second segment 4227 of the short rod 422 can rise and fall together with the motion of the four-connecting rod mechanism, to drive the lifting member 2 to rise and fall together.

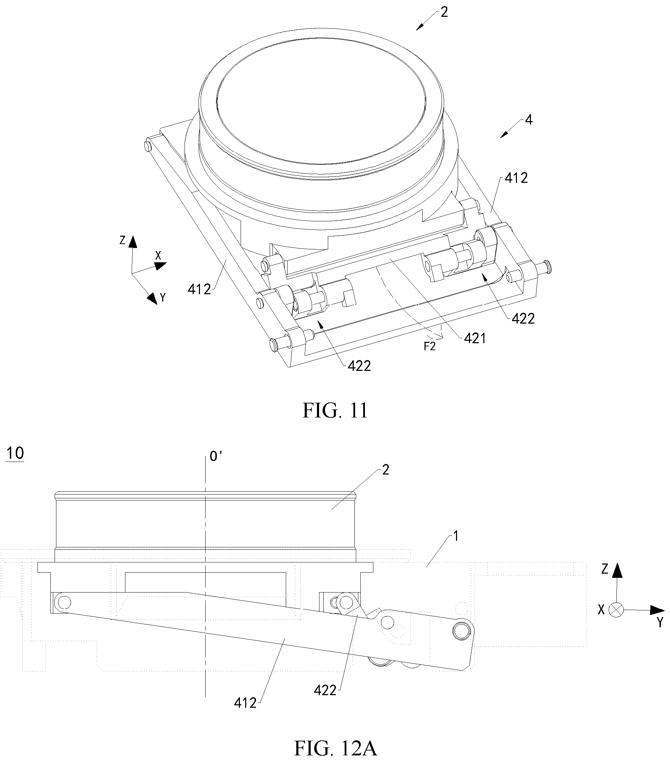

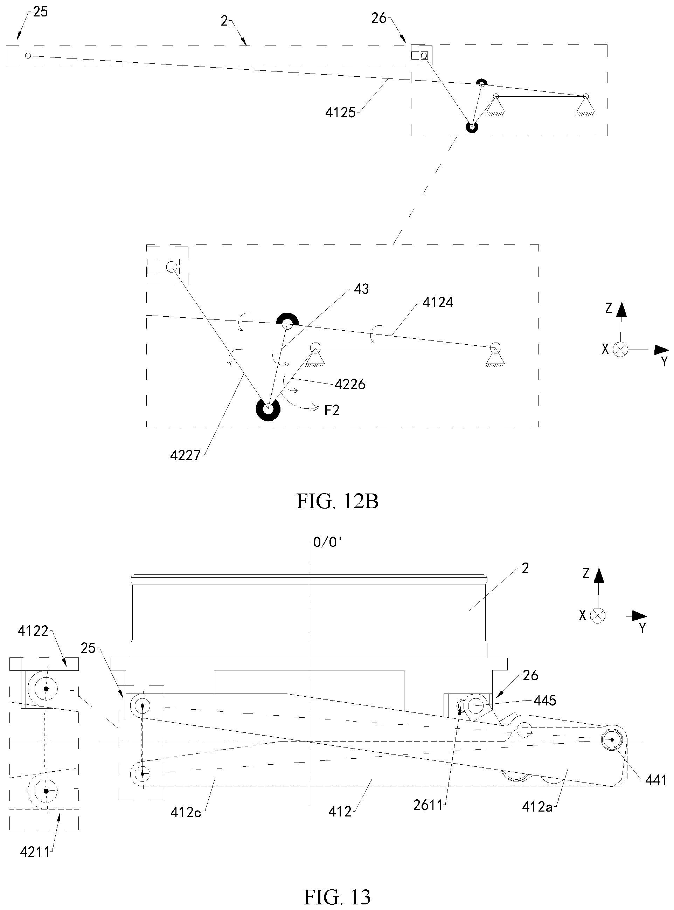

In this embodiment, in the retracted state, from the perspective of the X direction, when the first segment 4226 of the short rod 422 is subjected to a clockwise driving force F1, the first segment 4226 of the short rod 422 can rotate clockwise and drive the second segment 4227 of the short rod 422 to rotate clockwise. This drives the second end 26 of the lifting member 2 to rotate clockwise, to displace the second end 26 of the lifting member 2 in the Z direction. In addition, the short rod 422 drives, through the connecting rod 43, the first segment 4124 of the long rod 412 to rotate clockwise, so that the first segment 4124 of the long rod 412 drives the second segment 4125 of the long rod 412 to rotate clockwise. This drives the first end 25 of the lifting member 2 to rotate clockwise, to displace the first end 25 of the lifting member 2 in the Z direction, thereby implementing rising of the entire lifting member 2. In this way, the lifting member 2 rises to a state shown in FIG. 11, FIG. 12A, and FIG. 12B.

Refer to FIG. 11, FIG. 12A, and FIG. 12B. FIG. 11 is a diagram of a connecting structure between the connecting rod assembly 4 and the lifting member 2 shown in FIG. 8A in some other states. FIG. 12A is a side view of the lifting member 2 mechanism shown in FIG. 3B. FIG. 12B is a simplified diagram of the lifting mechanism 10 shown in FIG. 12A. Dotted lines in FIG. 12A represent the base 1, and dashed lines with arrows in FIG. 12B represent a rotation direction.

In some embodiments, in the extended state, from the perspective of the X direction, when the first segment 4226 of the short rod 422 is subjected to a counterclockwise retracting force F2, the first segment 4226 of the short rod 422 can rotate counterclockwise and drive the second segment 4227 of the short rod 422 to rotate counterclockwise. This drives the second end 26 of the lifting member 2 to rotate counterclockwise, to displace the second end 26 of the lifting member 2 in the negative Z direction. In addition, the short rod 422 drives, through the connecting rod 43, the first segment 4124 of the long rod 412 to rotate counterclockwise, so that the first segment 4124 of the long rod 412 drives the second segment 4125 of the long rod 412 to rotate counterclockwise. This drives the first end 25 of the lifting member 2 to rotate counterclockwise, to displace the first end 25 of the lifting member 2 in the negative Z direction, thereby implementing falling of the entire lifting member 2. In this way, the lifting member 2 falls to a state shown in FIG. 8A, FIG. 10A, and FIG. 10B.

The first segment 4226 of the short rod 422 and the second segment 4227 of the short rod 422 are arranged at an included angle, to help the short rod 422 meet a motion requirement and a space requirement of the four-connecting rod mechanism.

Refer to FIG. 8B, FIG. 10B, and FIG. 12B. In some embodiments, two groups of transmission members 44 located on two sides of the lifting member 2 and the base 1 can form two groups of four-connecting rod mechanisms.

In this embodiment, the two groups of transmission members 44 are connected through the long support rod 411 and the short support rod 421, so that the two groups of four-connecting rod mechanisms can move simultaneously. Under the drive of the two short rods 422, the first side 27 and the second side 28 of the lifting member 2 can rise and fall simultaneously, making the second end 26 of the lifting member 2 rise and fall smoothly. Under the drive of the two long rods 412, the first side 27 and the second side 28 at the first end 25 of the lifting member 2 can rise and fall simultaneously, making the first end 25 of the lifting member 2 rise and fall smoothly. Under the joint drive of the two short rods 422 and the two long rods 412, the first end 25 and the second end 26 of the lifting member 2 can rise and fall simultaneously in the Z direction, making the entire lifting member 2 rise and fall smoothly. Therefore, the two groups of four-connecting rod mechanisms are simultaneously driven, so that the two sides of the lifting member 2 can be simultaneously driven to rise and fall, thereby improving lifting stability of the lifting member 2.

Refer to FIG. 8A and FIG. 11. In some embodiments, the drive assembly 3 may apply the driving force to the short support rod 421 (refer to F1 in FIG. 8A), and drive the short support rod 421 by using the driving force F1, to drive the short rod 422 and the long rod 412, so that the short rod 422 and the long rod 412 jointly drive the lifting member 2 to rise.

A point of action by the driving force F1 on the short support rod 421 is close to a bottom side of the short support rod 421, so that a force arm of the driving force F1 is longer, thereby improving driving efficiency.

In some embodiments, the drive assembly 3 may apply the retracting force to the short support rod 421 (refer to F2 in FIG. 11), and pull the short support rod 421 by using the retracting force F2, to drive the short rod 422 and the long rod 412, so that the short rod 422 and the long rod 412 jointly drive the lifting member 2 to fall.

For example, a point of action on the short support rod 421 when the lifting member 2 is driven to retract is the same as a point of action on the short support rod 421 when the connecting rod assembly 4 is driven to drive the lifting member 2 to extend, so that the drive assembly 3 drives the connecting rod assembly 4 coherently, and the lifting member 2 can be kept moving stably, thereby avoiding a deviation of the lifting member 2.

In some other embodiments, a force used by the drive assembly 3 to drive the lifting member 2 to extend and retract may be applied to the short rod 422, the long rod 412, the short support rod 421, or the like. In this embodiment of this application, an example in which the driving force of the drive assembly 3 is applied to only the short support rod 421 is used for description, and an object to which the driving force of the drive assembly 3 is applied is not limited.

In some other embodiments, in the extended state, when the top side of the lifting member 2 is subjected to a force toward the negative Z direction, the lifting member 2 may drive the connecting rod assembly 4 to rotate, to implement falling of the lifting member 2.

Refer to FIG. 5B, FIG. 9A, and FIG. 13. FIG. 13 is a diagram of the lifting mechanism 10 shown in FIG. 10A during lifting.

In some embodiments, an axis (refer to O in FIG. 10A) of the lifting member 2 in the initial position coincides with an axis (refer to O' in FIG. 12A) of the lifting member 2 in the extended position. The axis of the lifting member 2 in the initial position is parallel to the Z direction.

In this embodiment, the axis of the lifting member 2 in the initial position coincides with the axis of the lifting member 2 in the extended position, so that relative positions of the lifting member 2 in the initial position and the extended position with the base 1 have no deviation on the XY plane. This can ensure that the optical axis of the lifting member 2 has no deviation, thereby ensuring light quality of the camera module located in the internal space of the lifting member 2, and ensuring image shooting quality of the camera apparatus 100.

For example, a connection line between an extended position and a retracted position of the second end 4122 of the long rod 412 is parallel to the Z direction. In other words, in the retracted state, a connection line between an extended position and a retracted position of the first end 25 of the lifting member 2 is parallel to the Z direction. In this embodiment, when the lifting member 2 extends from the initial position to the extended position, the lifting member 2 does not rotate about the axis of the lifting member 2, so that the lifting member 2 moves stably during switching between the extended state and the retracted state.

In some embodiments, a size of the sliding slot 2611 of the second end 26 of the lifting member 2 in the Y direction is greater than an outer diameter of the second rotating pin 445. In this embodiment, the second rotating pin 445 may move in the slot in positive and negative Y directions.

During switching of the lifting member 2 between the initial position and the extended position, the long rod 412 rotates about the axis of the first rotating shaft 441 as a center of rotation, so that a motion path between the second end 4122 of the long rod 412 and the second rotating shaft 442 is an arc. In other words, a motion path of the first end 25 of the lifting member 2 in a rising and falling process is an arc, and the arc uses the axis of the first rotating shaft 441 as a circle center. Therefore, the first end 25 of the lifting member 2 has a motion distance in the Y direction in the rising and falling process, thereby driving the second end 26 of the lifting member 2 to have a motion distance in the Y direction.

During switching of the lifting member 2 between the initial position and the extended position, the short rod 422 rotates about the axis of the first rotating pin 444 as a center of rotation, so that a motion path between the second rotating part 4223 of the short rod 422 and the second rotating pin 445 is an arc. In other words, a motion path of the second end 26 of the lifting member 2 in a rising and falling process is an arc, and the arc uses the axis of the first rotating pin 444 as a circle center. Therefore, there is a motion distance in the Y direction in the rising and falling process of the second end 26 of the lifting member 2.

The motion path between the second end 4122 of the long rod 412 and the second rotating shaft 442 is inconsistent with the motion path between the second rotating part 4223 of the short rod 422 and the second rotating pin 445 in the Y direction, so that motion deviations of the first end 25 and the second end 26 of the lifting member 2 in the Y direction are not synchronous in the rising and falling process. In this embodiment, the size of the sliding slot 2611 in the Y direction is set to be greater than the outer diameter of the second rotating pin 445, so that during lifting of the lifting member 2, the second rotating pin 445 can move in the sliding slot 2611 in the Y direction, to eliminate a motion deviation between the first end 25 and the second end 26 of the lifting member 2 in the Y direction during lifting. This improves smoothness of a lifting motion of the lifting member 2.

For example, a difference between the size of the sliding slot 2611 in the Y direction and the outer diameter of the second rotating pin 445 ranges from 0 mm to 0.08 mm. For example, the difference may be, but is not limited to, 0.01 mm, 0.03 mm, 0.05 mm, 0.07 mm, 0.08 mm, or another value between 0.01 mm and 0.08 mm.

The sliding slot 2611 may be a straight slot, and an extension direction of the sliding slot 2611 is perpendicular to the axis of the lifting member 2. This helps keep heights of the first end 25 and the second end 26 of the lifting member 2 consistent, so that lifting strokes of the first end 25 and the second end 26 of the lifting member 2 are consistent, and stability of the lifting member 2 is improved. In some other embodiments, the sliding slot 2611 may be alternatively an arc-shaped slot or a spline curve slot. Specifically, the sliding slot 2611 is designed based on the motion path of the second rotating pin 445 during lifting of the lifting member 2, provided that the lifting strokes of the first end 25 and the second end 26 of the lifting member 2 are consistent.

In this embodiment, the lifting member 2 may be provided with the second avoidance groove 221, and the second avoidance groove 221 is used to avoid another mechanical part, for example, a decoration member, during lifting of the lifting member 2. This avoids collision, damage, or a motion deviation in the Y direction that affects lifting precision, to avoid collision of the lifting member 2 during lifting.

In this embodiment, in the retracted state, the first rotating hole 4121a of the long rod 412 is located on a side of the second rotating hole 4122a in the Z direction, and a surface of the bottom side of the long rod 412 is a plane and is parallel to the XY plane. Because the axis of the first rotating hole 4121a is a center of rotation of the long rod 412, and the height of the first rod 412a of the long rod 412 is greater than a height of the third rod 412c in the Z direction, the first rotating hole 4121a is positioned higher than the second rotating hole 4122a, so that in a process in which the connecting rod assembly 4 drives the lifting member 2 to rise in the Z direction, the third rod 412c can move in the Z direction using a size of the first rod 412a in the Z direction. In this way, when a moving stroke of the lifting member 2 keeps unchanged, a size and space occupied by the lifting mechanism 10 in the Z direction can be reduced. This helps implement a light and thin design of the lifting mechanism 10.

In this embodiment, because a surface of the top side of the third rod 412c of the long rod 412 is an oblique surface, the size of the second end 4122 of the long rod 412 in the Z direction is reduced, so that a weight of the long rod 412 is reduced, thereby reducing power consumption for driving the long rod 412, and improving motion flexibility of the long rod 412.

In some other embodiments, the mating hole 2511 of the first end 25 of the lifting member 2 may be changed into a groove structure, and the sliding slot 2611 at the second end 26 of the lifting member 2 may be changed into a hole structure. The second end 4122 of the long rod 412 is slidably connected to the second end 26 of the lifting member 2, and the second rotating part 4223 of the short rod 422 is rotatably connected to the first end 25 of the lifting member 2. In this embodiment, the groove structure of the first end 25 of the lifting member 2 eliminates a motion deviation of the first end 25 and the second end of the lifting member 2 in the Y direction during lifting. This improves smoothness of a lifting motion of the lifting member 2.

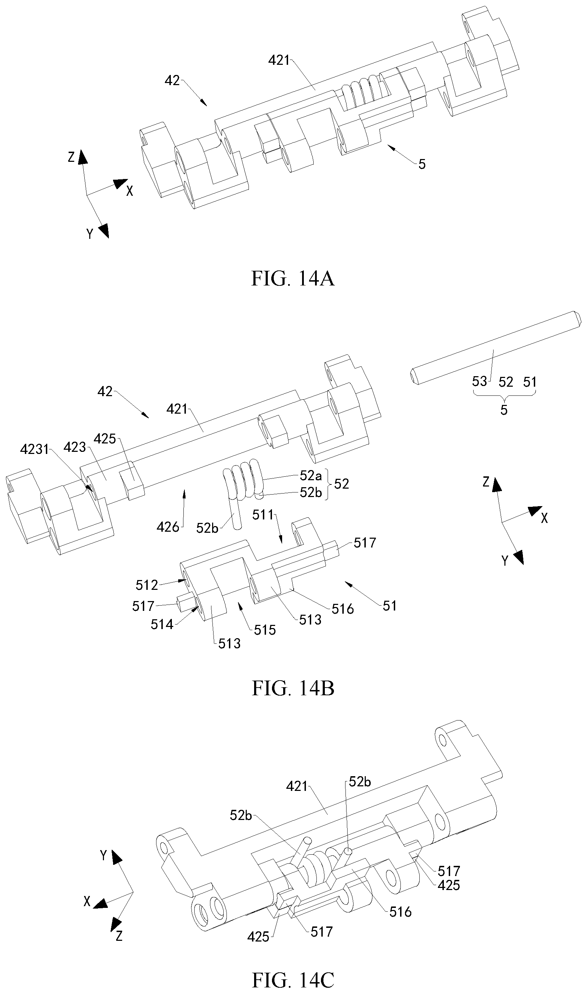

Refer to FIG. 14A to FIG. 14C. FIG. 14A is a diagram of a structure of the buffer assembly 5 in the lifting mechanism 10 shown in FIG. 4 in some embodiments. FIG. 14B is a diagram of an exploded structure of the buffer assembly 5 shown in FIG. 14A. FIG. 14C is a diagram of a structure of the buffer assembly 5 shown in FIG. 14A from another perspective.

In some embodiments, the buffer assembly 5 is rotatably connected between the short support rod 421 and the drive assembly. The buffer assembly 5 may include a buffer rod 51, a torsion spring 52, and a buffer rotating pin 53.

For example, the buffer rod 51 is provided with an accommodating groove 511, the buffer rod 51 is further provided with a buffer rotating hole 512, and the buffer rotating hole 512 extends through the buffer rod 51 in an extension direction of the buffer rod 51 and communicates with the accommodating groove 511. The buffer rod 51 is further provided with transmission bumps 513, and the transmission bumps 513 are disposed opposite to the accommodating groove 511. The buffer rod 51 is further provided with a transmission hole 514, and the transmission hole 514 extends through the transmission bumps 513 in the extension direction of the buffer rod 51. The buffer rod 51 is further provided with an accommodating groove 515, the accommodating groove 515 extends through the transmission bumps 513 and is provided opposite to the accommodating groove 511, and the accommodating groove 515 communicates with the transmission hole 514. The buffer rod 51 may be further provided with a baffle plate 516. The baffle plate 516 is connected to a bottom wall of the accommodating groove 511 and extends in a direction away from the accommodating groove 511. In this embodiment, the baffle plate 516 extends from the bottom wall of the accommodating groove 511 toward the negative Z direction. Two support blocks 517 respectively protrude from two ends of the buffer rod 51.

The buffer rod 51 is disposed in the mounting space 426 of the short balancing rod 42. The accommodating groove 511 is provided toward the short support rod 421. The buffer rotating hole 512 and the fourth rotating hole 4231 of the limiting block 423 of the short balancing rod 42 are coaxially provided. The support block 517 abuts against the limiting rib 425 of the short balancing rod 42. The torsion spring 52 is mounted in the accommodating groove 511, and the torsion spring 52 is located between the bottom wall of the accommodating groove 511 and the short support rod 421. The buffer rotating pin 53 extends through the fourth rotating hole 4231, a spring body 52a of the torsion spring 52, and the buffer rotating hole 512.

In some embodiments, in the retracted state, one pin 52b of the torsion spring 52 elastically abuts against the short support rod 421, and the other pin 52b elastically abuts against the bottom wall of the accommodating groove 511. Forces applied by the torsion spring 52 to the short support rod 421 and the bottom wall of the accommodating groove 511 enable the support block 517 of the buffer rod 51 to abut against the limiting rib 425 of the short balancing rod 42.

In this embodiment, the torsion spring 52 is in a compressed state. In this case, a force applied by the torsion spring 52 to the short support rod 421 is opposite in direction to a force causing the support block 517 of the buffer rod 51 to abut against the limiting rib 425 of the short balancing rod 42, and a force applied by the torsion spring 52 to the bottom wall of the accommodating groove 511 of the buffer rod 51 is opposite in direction to a force causing the limiting rib 425 of the short balancing rod 42 to abut against the support block 517 of the buffer rod 51, so that acting forces between the buffer rod 51 and the short balancing rod 42 are balanced, allowing the buffer rod 51 and the short balancing rod 42 to keep relatively stationary when not subjected to external forces. This helps improve stability of a connection between the buffer rod 51 and the short support rod 421, thereby improving transmission stability.

In this embodiment, because the torsion spring 52 is always in the compressed state, the torsion spring 52 can keep specific rigidity. When the buffer rod 51 further slowly compresses the torsion spring 52 under force, the torsion spring 52 can quickly restore to an initial state to drive the short balancing rod 42. Therefore, when the buffer rod 51 slowly compresses the torsion spring 52 under force, the buffer assembly 5 and the short balancing rod 42 may be considered as an integral part and move synchronously under force.

For example, the buffer assembly 5 can drive the short balancing rod 42 to move under the drive of an external force. In this embodiment, the buffer assembly 5 can drive the short balancing rod 42 to move under the drive of the drive assembly 3, thereby implementing lifting of the lifting member 2.

In a process of driving the lifting member to rise, the buffer rod 51 is subjected to a force and rotates toward a direction of the short balancing rod 42 with the buffer rotating pin 53 as a fulcrum. When the buffer rod 51 rotates slowly under force, the buffer assembly 5 and the short balancing rod 42 can rotate synchronously, to drive the lifting member 2 to rise together with the long balancing rod 41. When the buffer rod 51 rotates rapidly under force, the buffer rod 51 rotates toward the direction of the short balancing rod 42 with the buffer rotating pin 53 as a fulcrum, so that a spacing between the bottom wall of the accommodating groove 511 and the short support rod 421 is reduced, to drive the two pins 52b of the torsion spring 52 to approach each other. In this case, the torsion spring 52 undergoes further compression deformation, and a deformation restoring force generated by the torsion spring 52 restoring from deformation acts on the short support rod 421, and drives the short support rod 421 to rotate toward a direction away from the buffer assembly 5, so that the short balancing rod 42 rotates in the direction away from the buffer assembly 5, to cooperate with the long balancing rod 41 to drive the lifting member 2 to rise.

The baffle plate 516 can be disposed corresponding to a pin 52b that is of the torsion spring 52 and that is close to the bottom wall of the accommodating groove 511, thereby increasing a contact surface between the buffer rod 51 and the pin 52b of the torsion spring 52 during rotation of the buffer rod 51 toward the short support rod 421, helping drive the torsion spring 52 to drive the short support rod 421, and improving force transmission efficiency.

During falling of the lifting member 2, the drive assembly drives the buffer rod 51 to rotate away from the short support rod 421, so that the buffer rod 51 can abut against the limiting rib 425 through the support block 517, and drive the short support rod 421 to rotate, thereby driving the lifting member to fall. During falling of the lifting member, there is no need to rely on deformation and deformation restoration of the torsion spring 52 for force transmission, increasing a transmission speed of the force during falling and helping rapid falling of the lifting member. In addition, the two pins 52b of the torsion spring 52 do not need to be stretched, so that stress fatigue of the torsion spring 52 can be reduced, thereby improving a service life of the torsion spring 52.

In some other embodiments, in the retracted state, the torsion spring 52 is located between the short support rod 421 and the bottom wall of the accommodating groove 511, and the torsion spring 52 is not elastically deformed. In other words, there is a gap between the torsion spring 52 and at least one of the short support rod 421 and the bottom wall of the accommodating groove 511, so that the torsion spring 52 needs to deform only in an extension process of the lifting member 2, thereby reducing a quantity of deformation times of the torsion spring 52, and improving the service life of the torsion spring 52.

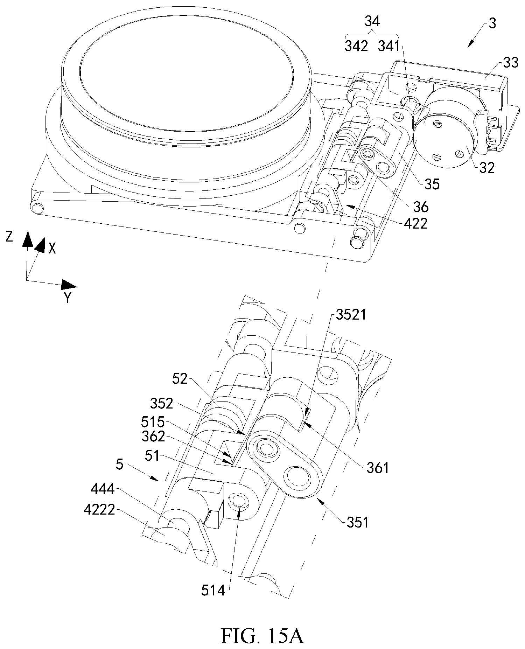

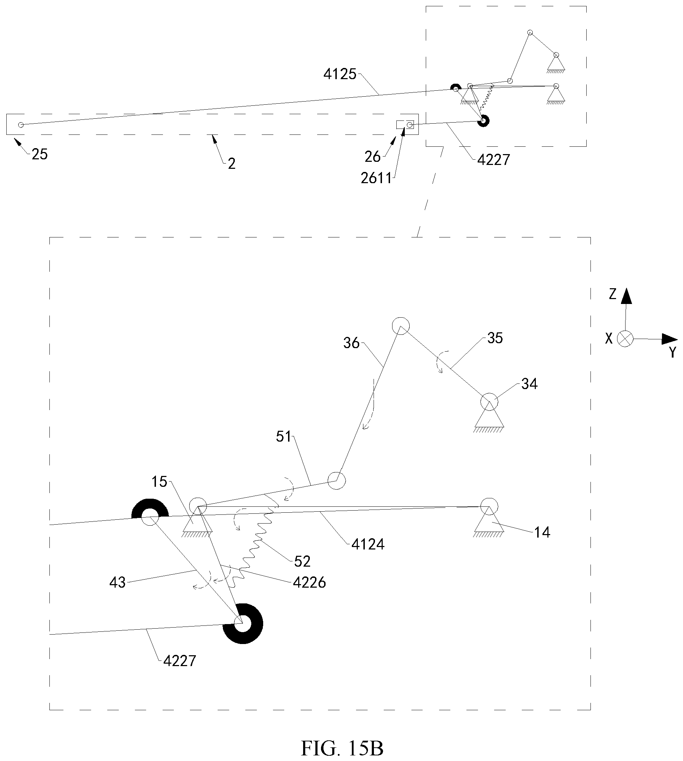

Refer to FIG. 14B, FIG. 15A, and FIG. 15B. FIG. 15A is a diagram of a structure of the drive assembly 3 and the connecting rod assembly 4 in the lifting mechanism 10 shown in FIG. 3A in some embodiments. FIG. 15B is a simplified diagram of the lifting mechanism 10 shown in FIG. 15A. A wavy line in FIG. 15B represents the torsion spring 52.

In some embodiments, the drive assembly 3 may include a motor 32, a gearbox 33, the drive shaft 34, a crank 35, and a transmission rod 36.

For example, the motor 32 may be in transmission connection with the drive shaft 34 through the gearbox 33. In this embodiment, the motor 32 is in transmission connection with the drive shaft 34 through the gearbox 33, so that a high rotational speed of the motor 32 can be reduced to a proper rotational speed, and the rotational speed is output by the drive shaft 34, thereby improving rotational speed control over the drive shaft 34, and improving lifting stability of the lifting member 2. In some other embodiments, the motor 32 may be directly connected to the crank 35, and is configured to drive the crank 35 to rotate, thereby improving transmission efficiency.

For example, the crank 35 may include a first end 351 and a second end 352. The first end 351 of the crank 35 is provided with a first through hole, the second end 352 of the crank 35 is provided with a transmission groove 3521 and a second through hole, and the second through hole communicates with the transmission groove 3521. The transmission rod 36 may include a first end 361 and a second end 362, the first end 361 of the transmission rod 36 is provided with a third through hole, and the second end 362 of the transmission rod 36 is provided with a fourth through hole.

The drive shaft 34 may extend through the first through hole, and is fastened to the first end 351 of the crank 35. The first end 361 of the transmission rod 36 may be accommodated in the transmission groove 3521, and the third through hole of the transmission rod 36 and the second through hole of the crank 35 are coaxially provided. The rotating pin extends through the second through hole and the third through hole, so that the second end 352 of the crank 35 can be rotatably connected to the first end 361 of the transmission rod 36. The second end 362 of the transmission rod 36 may be accommodated in the accommodating groove 515, and the fourth through hole and the transmission hole 514 of the buffer rod 51 are coaxially provided. The rotating pin extends through the fourth through hole and the transmission hole 514, so that the second end 362 of the transmission rod 36 can be rotatably connected to the buffer rod 51.

In this embodiment, the motor 32 may drive the crank 35 to rotate, to drive the transmission rod 36 to drive the buffer rod 51 to rotate, thereby driving the lifting member 2 to rise and fall, so that the lifting mechanism 10 is switched between the retracted state and the extended state.

Because an axis of the buffer rod 51 coincides with an axis of the first rotating hole 4222a of the first rotating part 4222 of the short rod 422, an axis of the buffer rotating pin 53 of the buffer assembly 5 coincides with an axis of the first rotating pin 444 of the transmission member. Therefore, when the short rod 422 rotates about the axis of the first rotating pin 444 as a center of rotation, the buffer rod 51 rotates about the axis of the buffer rotating pin 53 as a center of rotation, which can be considered that the buffer rod 51 rotates about the axis of the first rotating pin 444 as a center of rotation.

The first end 351 of the crank 35 is rotatably connected to the drive shaft 34, the second end 352 of the crank 35 is rotatably connected to the first end 361 of the transmission rod 36, and the second end 362 of the transmission rod 36 is rotatably connected to the buffer rod 51. The buffer rod 51 is elastically connected to the short support rod 421 through the torsion spring 52. This connection can be considered as an elastic connection between the buffer rod 51 and the first segment 4226 of the short rod 422. The first segment 4226 of the short rod 422 is rotatably connected to the second fastening part 15 of the base 1, and an end that is of the second segment 4227 of the short rod 422 and that is away from the first segment 4226 of the short rod 422 is slidably connected to the sliding slot 2611 of the second end 26 of the lifting member 2. The first segment 4124 of the long rod 412 is rotatably connected to the first fastening part 14 of the base 1, and an end that is of the second segment 4125 of the long rod 412 and that is away from the first segment 4124 of the long rod 412 is rotatably connected to the mating hole of the first end 25 of the lifting member 2. Therefore, the motor 32 can drive, by driving the crank 35 and the connecting rod 43, the four-connecting rod mechanism to move, so that the second segment 4125 of the long rod 412 and the second segment 4227 of the short rod 422 can rise and fall together with the motion of the four-connecting rod mechanism, to drive the lifting member 2 to rise and fall together.

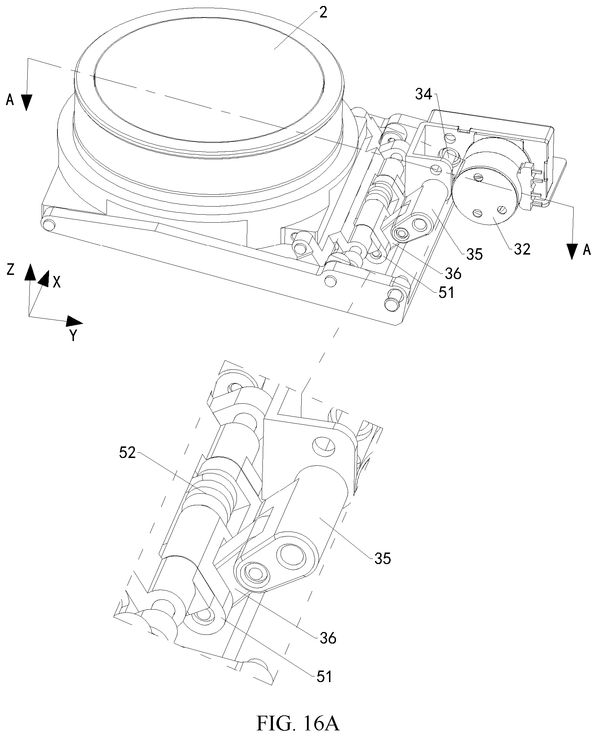

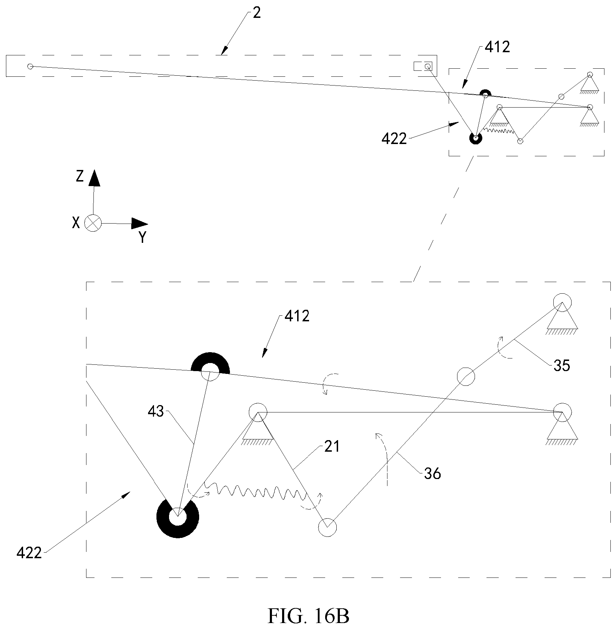

In the retracted state, from the perspective of the X direction, the motor 32 drives, through the gearbox 33, the drive shaft 34 to rotate counterclockwise. This can drive the crank 35 to rotate counterclockwise, resulting in a displacement of the transmission rod 36 in the negative Z direction and an overall clockwise rotation. The second end 362 of the transmission rod 36 drives the buffer rod 51 to rotate clockwise, and drives, through the torsion spring 52, the short rod 422 to rotate clockwise. The short rod 422 drives, through the connecting rod 43, the long rod 412 to rotate clockwise, so that the short rod 422 and the long rod 412 can jointly drive the lifting member 2 to rise to the extended position. The lifting member 2 rising to the extended position is shown in FIG. 16A and FIG. 16B.

Refer to FIG. 14B, FIG. 16A, and FIG. 16B. FIG. 16A is a diagram of a structure of the drive assembly 3 and the connecting rod assembly 4 in the lifting mechanism 10 shown in FIG. 3B in some embodiments. FIG. 16B is a simplified diagram of the lifting mechanism 10 shown in FIG. 16A.

In some embodiments, in the extended state, the motor 32 can be driven to rotate the crank 35 in reverse. This rotation drives the transmission rod 36, which in turn rotates the buffer rod 51, resulting in falling of the lifting member 2.

In this embodiment, during falling of the lifting member 2, the support block 517 in the buffer assembly 5 can abut against the limiting rib 425 in the short balancing rod 42, so that the buffer assembly 5 and the short balancing rod 42 move together.

In the extended state, from the perspective of the X direction, the motor 32 drives, through the gearbox 33, the drive shaft 34 to rotate clockwise. This can drive the crank 35 to rotate clockwise, resulting in a displacement of the transmission rod 36 in the Z direction and an overall counterclockwise rotation. The transmission rod 36 drives the buffer rod 51 to rotate counterclockwise. The buffer rod 51 drives, through cooperation between the support block 517 and the limiting rib 425, the entire short balancing rod 42 to rotate counterclockwise, so that the short rod 422 rotates counterclockwise. The short rod 422 drives, through the connecting rod 43, the long rod 412 to rotate counterclockwise, so that the short rod 422 and the long rod 412 can jointly drive the lifting member 2 to fall to the initial position. The lifting member 2 falling to the initial position is shown in FIG. 15A and FIG. 15B.

Refer to FIG. 3A, FIG. 4, and FIG. 15A. In some embodiments, the drive shaft 34 is rotatably connected to the drive fastening part 13 of the base 1. The drive shaft 34 may include an output shaft 341 and a support shaft 342. The output shaft 341 and the support shaft 342 are coaxially disposed. The output shaft 341 is transmission connected between the gearbox 33 and the crank 35. The support shaft 342 is connected to the crank 35 and the drive fastening part 13 of the base 1. In this embodiment, the support shaft 342 can improve mounting stability of the drive assembly 3, thereby improving transmission stability of the drive assembly 3. In addition, the support shaft 342 can extend through the auxiliary fastening hole 143 of the first fastening part 14 of the base 1, thereby further improving mounting stability of the drive assembly 3.

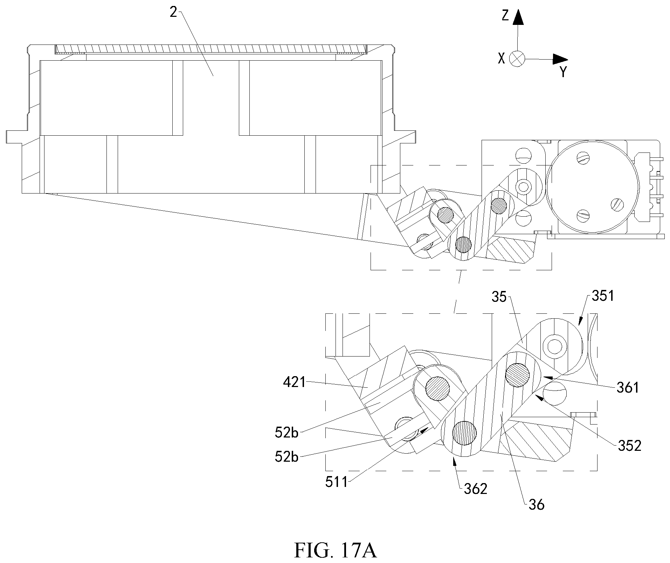

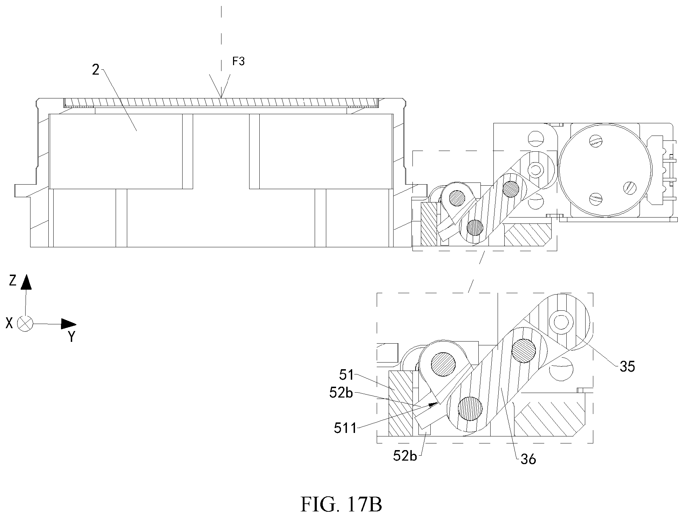

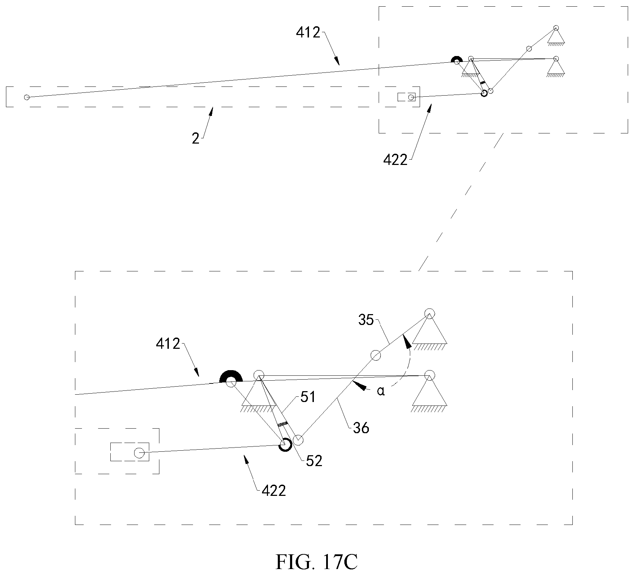

Refer to FIG. 17A to FIG. 17C. FIG. 17A is a cross-sectional diagram of a structure of the lifting mechanism 10 shown in FIG. 16A cut along an A-A position. FIG. 17B is a diagram of a structure in which the lifting member 2 in the lifting mechanism 10 shown in FIG. 17A is retracted under force. FIG. 17C is a simplified diagram of the lifting mechanism 10 shown in FIG. 17B.

In some embodiments, when the lifting mechanism 10 is in the extended state, an included angle formed by a connection line between the first end 361 of the transmission rod 36 and the second end 362 of the transmission rod 36 and a connection line between the first end 351 of the crank 35 and the second end 352 of the crank 35 is 180°±10° (refer to α in FIG. 17C).

For example, in the extended state, the lifting member 2 is subjected to external pressure in the negative Z direction (refer to F3 in FIG. 17B), and the pressure F3 drives the lifting member 2 to retract in the negative Z direction, to drive the long rod 412 to rotate counterclockwise around the first rotating shaft 441, and drive the short rod 422 to rotate counterclockwise around the first rotating pin 444. When the short rod 422 rotates counterclockwise around the first rotating pin 444, the short support rod 421 is driven to press the torsion spring 52 against the bottom wall of the accommodating groove 511 of the buffer rod 51, to compress the pin 52b of the torsion spring 52.

In this embodiment, the transmission rod 36 and the crank 35 are arranged at the included angle α. In this case, the transmission rod 36 and the crank 35 are at a dead point position of the mechanism, so that the transmission rod 36 and the crank 35 do not rotate relative to each other, and the transmission rod 36 and the crank 35 jointly form a support for the buffer rod 51. Therefore, the bottom wall of the accommodating groove 511 of the buffer rod 51 can form support for the torsion spring 52. The torsion spring 52 is compressed under the pressure F3, and the transmission rod 36 does not drive the crank 35 to rotate, so that the crank 35 does not drive the motor 32 to rotate, and the motor 32 does not rotate passively, to protect the motor 32.

In addition, the lifting member 2 can fall under the pressure F3 in the negative Z direction, and the torsion spring 52 can absorb the pressure F3 through deformation during this process to prevent impact damage to the lifting member 2. In addition, after the lifting member 2 falls, the base can provide protection for the lifting member 2, to avoid further collision of the lifting member 2. In addition, upon removal of the pressure F3 from the lifting member 2, a deformation restoring force of the torsion spring 52 can drive the short rod 422 and the long rod 412 to rotate together, thereby restoring the lifting member 2 to the extended state.

A value of the included angle α may be, but is not limited to, 170°, 175°, 180°, 185°, 190°, or another value between 170° and 190°, provided that the transmission rod 36 and the crank 35 can form the dead point of the mechanism in the extended state.

The pressure F3 may result from falling of the electronic device 1000, impact of the electronic device 1000 with an external object, squeezing of the electronic device 1000 by the outside world, or the like.

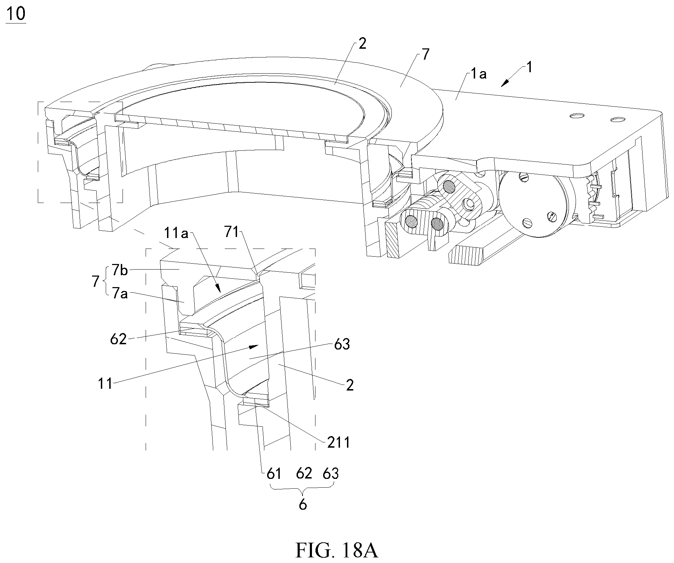

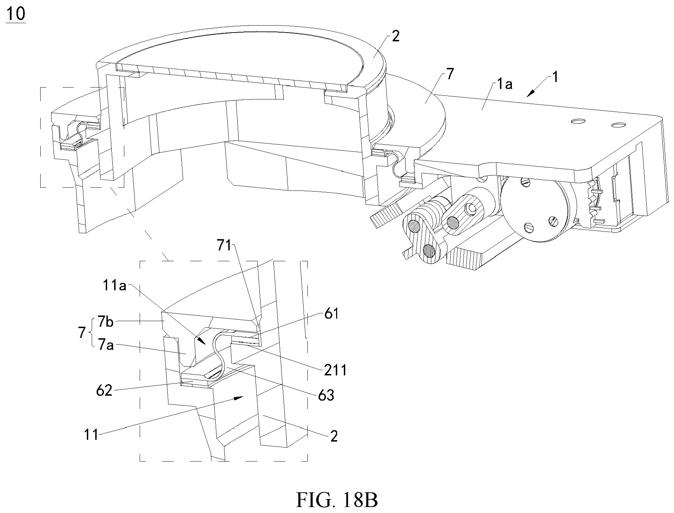

Refer to FIG. 5B, FIG. 18A, and FIG. 18B. FIG. 18A is a cross-sectional diagram of a structure of the lifting mechanism 10 shown in FIG. 3A cut along a B-B position. FIG. 18B is a cross-sectional diagram of a structure of the lifting mechanism 10 shown in FIG. 3B cut along a C-C position.

In some embodiments, at least a part of the lifting member 2 is located in the internal space 11 of the base 1. The decoration member 7 may be mounted on the base 1, and the decoration member 7 surrounds the lifting member 2, and covers a gap between the lifting member 2 and the top wall 1a of the base 1. For example, the decoration member 7 may include a first part 7a and a second part 7b. The first part 7a is embedded into the sink groove 11a of the top wall 1a. The second part 7b is connected to the first part 7a and is located on a top side of the top wall 1a of the base 1, and the second part 7b covers a side wall of the sink groove 11a. The decoration member 7 has an accommodating hole 71. The accommodating hole 71 accommodates the lifting member 2 and allows the lifting member 2 to extend through, to implement rising and falling of the lifting member 2.

In this embodiment, the decoration member 7 covers the gap between the base 1 and the lifting member 2, thereby serving to decorate and improve appearance. In addition, the decoration member 7 can further prevent foreign matter, dust, and the like from entering the gap between the base 1 and the lifting member 2, thereby implementing sealing and dustproof functions.

In some embodiments, the waterproof assembly 6 may be located in the gap between the lifting member 2 and the base 1, so that a waterproof member 63 can be blocked by the decoration member 7, thereby avoiding direct contact between the waterproof assembly 6 and external air, slowing down oxidation and corrosion of the waterproof assembly 6, and improving a service life of the waterproof assembly 6.

For example, the waterproof assembly 6 may include a first waterproof ring 61, a second waterproof ring 62, and the waterproof member 63. The first waterproof ring 61 and the second waterproof ring 62 are connected to two ends of the waterproof member 63. The first waterproof ring 61 is sleeved on the lifting member 2 and fastened to the limiting surface 211. The second waterproof ring 62 is fastened to a bottom wall of the sink groove 11a. The waterproof member 63 is also roughly annular or ring-shaped.

In this embodiment, the first waterproof ring 61, the second waterproof ring 62, and the waterproof member 63 are disposed to cover a gap between the lifting member 2 and the base 1, thereby implementing waterproof and dustproof sealing functions, to protect an internal structure of the electronic device 1000.

For example, the waterproof member 63 is deformable, to follow a motion of the lifting member 2. In this embodiment, during lifting, the lifting member 2 can drive the first waterproof ring 61 to move together through the limiting surface 211, and the first waterproof ring 61 causes the waterproof member 63 to deform, so that the waterproof member 63 can move up and down together with the lifting member 2. In this way, during lifting of the lifting member 2, the waterproof assembly 6 can cover the gap between the lifting member 2 and the base 1, thereby implementing the waterproof and dustproof sealing functions of the lifting member 2 during lifting.

In some other embodiments, the first waterproof ring 61 and the second waterproof ring 62 may not alternatively be disposed on the waterproof assembly 6, but one end of the waterproof member 63 is directly fastened to the lifting member 2, and the other end is directly fastened to the base 1. A specific implementation structure of the waterproof assembly 6 is not strictly limited in embodiments of this application.

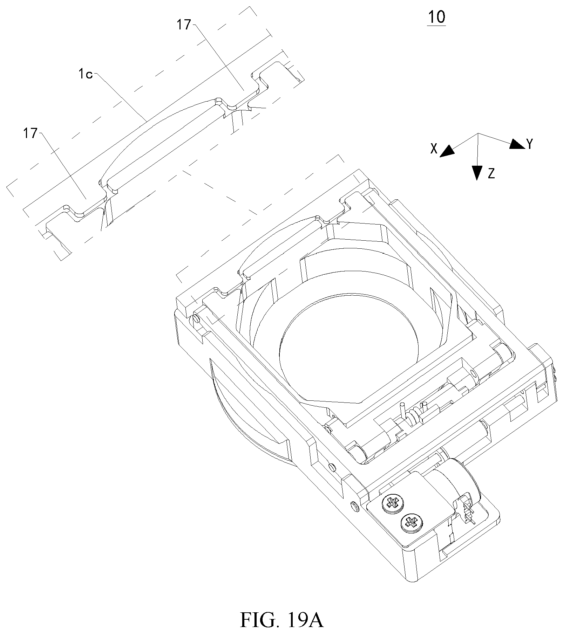

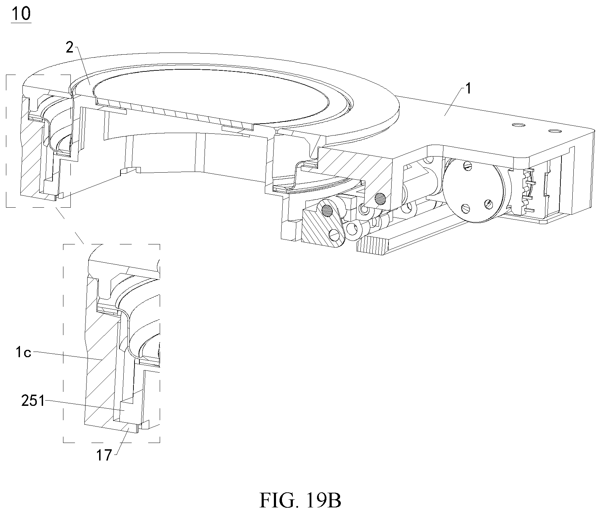

Refer to FIG. 5B, FIG. 19A, and FIG. 19B. FIG. 19A is a diagram of a structure of the lifting mechanism 10 shown in FIG. 3A from another perspective. FIG. 19B is a cross-sectional diagram of a structure of the lifting mechanism 10 shown in FIG. 3A cut along a D-D position.

In some embodiments, a retracted limiting table 17 is disposed on a bottom side of the base 1, and the retracted limiting table 17 is connected to a bottom side of the second side wall 1c, and protrudes toward an internal space of the housing. When the lifting mechanism 10 is in the retracted state, the first boss 251 of the lifting member 2 abuts against a top side of the retracted limiting table 17.

In this embodiment, the retracted limiting table 17 is disposed on the bottom side of the base 1, so that when the lifting member 2 is switched from the extended state to the retracted state, a top side surface of the retracted limiting table 17 can limit the lifting member 2, thereby preventing the lifting member 2 from colliding with another component inside the electronic device 1000 due to excessive retraction. In addition, because the lifting member 2 is in the retracted state in most cases, the retracted limiting table 17 can form a support for the lifting member 2, to keep overall structural stability of the lifting mechanism 10.

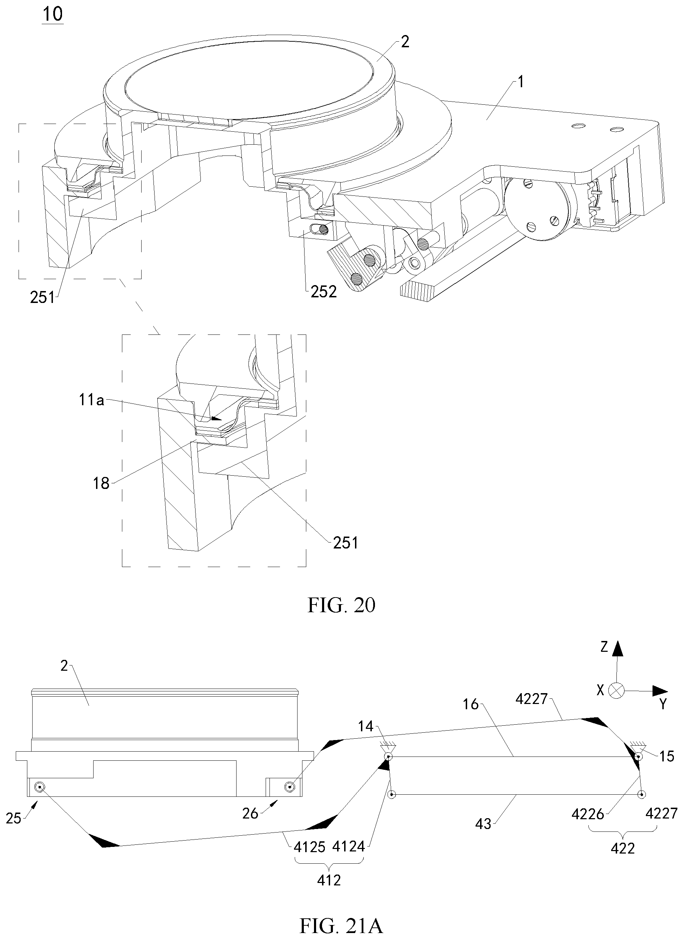

Refer to FIG. 5A, FIG. 5B, and FIG. 20. FIG. 20 is a cross-sectional diagram of a structure of the lifting mechanism 10 shown in FIG. 3B cut along an E-E position.

In some embodiments, the base 1 may further have an extended limiting table 18, and the extended limiting table 18 and the retracted limiting table are disposed opposite to each other. The first boss 251 and the second boss 261 are located between the extended limiting table 18 and the retracted limiting table. When the lifting mechanism 10 is in the extended state, the first boss 251 and the second boss 261 abut against a bottom side of the extended limiting table 18.

In this embodiment, the extended limiting table 18 is disposed close to the top side of the base 1, so that when the lifting member 2 is switched from the retracted state to the extended state, a bottom side surface of the extended limiting table 18 can limit the lifting member 2, to avoid excessive extension of the lifting member 2, and ensure that the lifting member 2 extends in a same size each time, thereby improving stability of the electronic device 1000 in a long-focus state.

The bottom wall of the sink groove 11a is connected to the extended limiting table 18, so that the bottom wall of the sink groove 11a can be connected to the first side wall 1b, the second side wall 1c, and the third side wall 1d through the extended limiting table 18, thereby improving structural strength of the bottom wall of the sink groove 11a. The bottom wall of the sink groove 11a is connected to the extended limiting table 18, so that an area limited by the extended limiting table 18 is further increased. This helps limit the lifting member 2.

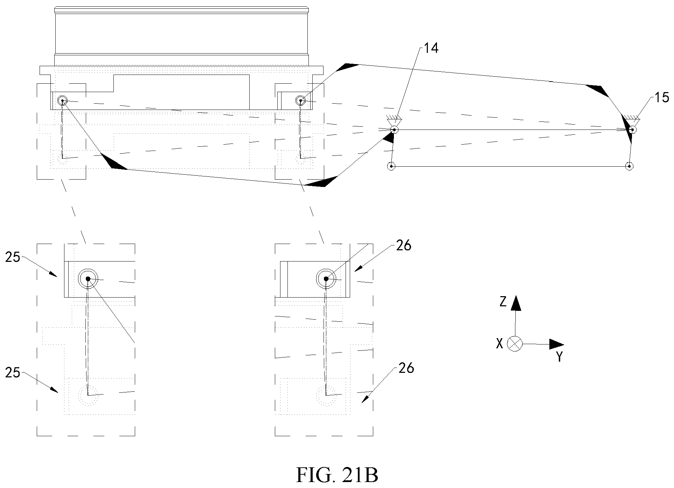

Refer to FIG. 5A, FIG. 21A, and FIG. 21B. FIG. 21A is a diagram of a connecting structure between the connecting rod assembly 4 and the lifting member 2 in the lifting mechanism 10 shown in FIG. 3A in some other embodiments. FIG. 21B is a diagram of a connecting structure between the connecting rod assembly 4 and the lifting member 2 in the lifting mechanism 10 shown in FIG. 3B in some other embodiments. In FIG. 21A, two rods connected by solid triangles are fastened to each other, and a dotted line in FIG. 21B represents the lifting member 2 in the initial position. This embodiment may include most of the technical features of the foregoing embodiments. The following mainly describes differences between this embodiment and the foregoing embodiments, and most of the technical features that are the same in this embodiment and the foregoing embodiments are not described again.

In some embodiments, the first fastening part 14 and the second fastening part 15 of the base 1 are spaced apart, and a part between the first fastening part 14 and the second fastening part 15 of the base 1 may be used as the fastening rod 16. The long rod 412 may include the first segment 4124 and the second segment 4125. The first segment 4124 of the long rod 412 is rotatably connected between the first fastening part 14 and the connecting rod 43, one end of the second segment 4125 of the long rod 412 is fastened to the first segment 4124 of the long rod 412, and the other end of the second segment 4125 of the long rod 412 is rotatably connected to the first end 25 of the lifting member 2. The short rod 422 may include the first segment 4226 and the second segment 4227. The first segment 4226 of the short rod 422 is rotatably connected between the second fastening part 15 and the connecting rod 43, one end of the second segment 4227 of the short rod 422 is fastened to the first segment 4226 of the short rod 422, and the other end of the second segment 4227 of the short rod 422 is rotatably connected to the second end 26 of the lifting member 2.

A length of the fastening rod 16 is equal to a length of the connecting rod 43 on the YZ plane. The fastening rod 16, the first segment 4124 of the long rod 412, the connecting rod 43, and the first segment 4226 of the short rod 422 are connected end to end to form a parallelogram. A distance between a center of rotation of the first end 25 of the lifting member 2 being rotatably connected to the second segment 4125 of the long rod 412 and a center of rotation of the second end 26 of the lifting member 2 being rotatably connected to the second segment 4227 of the short rod 422 is equal to the length of the connecting rod 43, and a connection line between the two centers of rotation of the lifting member 2 is parallel to the fastening rod 16.

For example, an axial direction of the lifting member 2 in the retracted state is parallel to the Z direction. A connection line between the first end 25 of the lifting member 2 in the extended state and the first end 25 of the lifting member 2 in the retracted state is parallel to the Z direction. A connection line between the second end 26 of the lifting member 2 in the extended state and the second end 26 of the lifting member 2 in the retracted state is parallel to the Z direction.

Because the fastening rod 16, the first segment 4124 of the long rod 412, the connecting rod 43, and the first segment 4226 of the short rod 422 may be connected end to end to form the parallelogram, during lifting of the lifting member 2, an angle at which the long rod 412 rotates about the first fastening part 14 is consistent with an angle at which the short rod 422 rotates about the second fastening part 15. In other words, a connection line between the first end 25 of the lifting member 2 and the first fastening part 14 in the extended state and a connection line between the first end 25 of the lifting member 2 and the first fastening part 14 in the retracted state form a first included angle, and a connection line between the second end 26 of the lifting member 2 and the second fastening part 15 in the extended state and a connection line between the second end 26 of the lifting member 2 and the second fastening part 15 in the retracted state form a second included angle, where the first included angle is equal to the second included angle.

In the Y direction, a distance between the first fastening part 14 and the second fastening part 15 is equal to a distance between the first end 25 of the lifting member 2 and the second end 26 of the lifting member 2, so that a length of a connection line between the first fastening part 14 and the first end 25 of the lifting member 2 is equal to a length of a connection line between the second fastening part 15 and the second end 26 of the lifting member 2. In other words, a rotational radius of the first end 25 of the lifting member 2 about the first fastening part 14 is equal to a rotational radius of the second end 26 of the lifting member 2 about the second fastening part 15. According to the arc length theorem, during lifting, a rotational arc length of the first end 25 of the lifting member 2 about the first fastening part 14 is equal to a rotational arc length of the second end 26 of the lifting member 2 about the second fastening part 15. Therefore, a rotational path of the first end 25 of the lifting member 2 about the first fastening part 14 is the same as a rotational path of the second end 26 of the lifting member 2 about the second fastening part 15.

In this embodiment, the connecting rod 43 connects the long rod 412 to the short rod 422, ensuring synchronous motions of the long rod 412 and the short rod 422. In addition, because a rotational path of the long rod 412 about the first fastening part 14 is the same as a rotational path of the short rod 422 about the second fastening part 15, during lifting of the lifting member 2, a motion path of the first end 25 and the second end of the lifting member 2 is arc-shaped, and deviation motions are consistent in the Y direction. In this way, the first end 25 of the lifting member 2 and the second end 26 of the lifting member 2 do not need to be provided with a sliding slot for a deviation design, and the entire lifting member 2 can keep balance, so that the bottom side of the lifting member 2 is always parallel to the XY plane, thereby improving lifting smoothness of the lifting member 2.

Refer to FIG. 8A, FIG. 8B, and FIG. 10A. In some other embodiments, the connecting rod assembly 4 may include a group of transmission members 44, and the lifting mechanism 10 may further include a guiding member (not shown in the figure). The transmission member 44 and the guiding member may be respectively located on the first side 27 and the second side 28 of the lifting member 2. The connecting rod assembly 4 and the base 1 jointly form a four-connecting rod mechanism to drive the lifting member 2 to rise and fall, and the guiding member is a guide rail of the lifting member 2 during lifting, so that when the connecting rod assembly 4 drives one side of the lifting member 2 to rise and fall, the other side of the lifting member 2 can rise and fall under a guide action of the guiding member.

It should be noted that embodiments of this application and features in embodiments may be combined with each other without a conflict, and any combination of features in different embodiments also falls within the protection scope of this application. In other words, the plurality of embodiments described above may be further combined according to an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lifting mechanism (10), used in a camera apparatus (100) comprising a camera module (20), wherein the lifting mechanism (10) comprises a base (1), a lifting member (2), and a connecting rod assembly (4), and both the lifting member (2) and the connecting rod assembly (4) are movably mounted on an inner side of the base (1);
the base (1) has a first fastening part (14) and a second fastening part (15) that are spaced apart; and
the connecting rod assembly (4) comprises:
a long rod (412), wherein a first end (4121) of the long rod (412) is rotatably connected to the first fastening part (14), a second end (4122) of the long rod (412) is rotatably connected to a first end (25) of the lifting member (2), the long rod (412) comprises a transition part (4123), and the transition part (4123) is located between the first end (4121) of the long rod (412) and the second end (4122) of the long rod (412);
a short rod (422), comprising a first rotating part (4222), a second rotating part (4223), and a third rotating part (4224) that are fastened to each other, wherein the first rotating part (4222) is rotatably connected to the second fastening part (15), the second rotating part (4223) is slidably or rotatably connected to a second end (26) of the lifting member (2), and the second end (26) of the lifting member (2) is closer to the first end (4121) of the long rod (412) than the first end (25) of the lifting member (2); and
a connecting rod (43), wherein a first end (431) of the connecting rod (43) is rotatably connected to the transition part (4123), and a second end (432) of the connecting rod (43) is rotatably connected to the third rotating part (4224); and
when the short rod (422) moves under force, the short rod (422) and the long rod (412) jointly drive the lifting member (2) to rise and fall relative to the base (1).

2. The lifting mechanism (10) according to claim 1, wherein the connecting rod assembly (4) comprises:
a long balancing rod (41), comprising a long support rod (411) and two long rods (412), wherein the two long rods (412) are disposed opposite to each other and are respectively located on two sides of the lifting member (2), and first ends (4121) of the two long rods (412) are respectively fastened to two ends of the long support rod (411); and
a short balancing rod (42), located between the two long rods (412), wherein the short balancing rod (42) comprises a short support rod (421) and two short rods (422), and the two short rods (422) are disposed opposite to each other and are respectively connected to two ends of the short support rod (421); and
the connecting rod assembly (4) comprises two groups of transmission members (44) symmetrically disposed, and each group of transmission members (44) comprises one of the long rods (412), one of the short rods (422), and one of connecting rods (43).

3. The lifting mechanism (10) according to claim 1 or 2, wherein the lifting mechanism (10) has a retracted state and an extended state;
in the retracted state, the lifting member (2) is in an initial position relative to the base (1); and in the extended state, the lifting member (2) rises to an extended position relative to the base (1); and
an axis of the lifting member (2) in the initial position coincides with an axis of the lifting member (2) in the extended position.

4. The lifting mechanism (10) according to claim 3, wherein a connection line between positions of the second end (4122) of the long rod (412) in the retracted state and the extended state is parallel to an axial direction of the lifting member (2) in the initial position.

5. The lifting mechanism (10) according to claim 3, wherein the first end (4121) of the long rod (412) is provided with a first rotating hole (4121a), the long rod (412) is rotatably connected to the first fastening part (14) through the first rotating hole (4121a), the second end (4122) of the long rod (412) is provided with a second rotating hole (4122a), and the long rod (412) is rotatably connected to the first end (25) of the lifting member (2) through the second rotating hole (4122a); and
in the retracted state, the first rotating hole (4121a) is closer to a top side of the lifting member (2) than the second rotating hole (4122a).

6. The lifting mechanism (10) according to any one of claims 1 to 5, wherein the lifting member (2) is provided with a sliding slot (2611), and the sliding slot (2611) is provided at the second end (26) of the lifting member (2); and
the connecting rod assembly (4) further comprises a second rotating pin (445), the second rotating pin (445) is fastened to or rotatably connected to the second rotating part (4223), at least a part of the second rotating pin (445) is located in the sliding slot (2611), and the second rotating pin (445) is slidable in an extension direction of the sliding slot (2611).

7. The lifting mechanism (10) according to claim 6, wherein the sliding slot (2611) is a straight slot, and the extension direction of the sliding slot (2611) is perpendicular to the axis of the lifting member (2).

8. The lifting mechanism (10) according to any one of claims 1 to 7, wherein the lifting member (2) is provided with a second avoidance groove (221), and the second avoidance groove (221) is annularly located on an outer circumferential side of the lifting member (2).

9. The lifting mechanism (10) according to any one of claims 1 to 8, wherein the first rotating part (4222) and the third rotating part (4224) are located on a side that is of the second rotating part (4223) and that is away from the lifting member (2), and the third rotating part (4224) is located on a bottom side of the first rotating part (4222); and
a connection line between the first rotating part (4222) and the third rotating part (4224) and a connection line between the second rotating part (4223) and the third rotating part (4224) are arranged in an included angle.

10. The lifting mechanism (10) according to claim 2, wherein the lifting mechanism (10) further comprises a drive assembly (3), the drive assembly (3) is in transmission connection with the short support rod (421), and the drive assembly (3) is configured to drive the short support rod (421), causing the short rod (422) to move under force.

11. The lifting mechanism (10) according to claim 10, wherein the lifting mechanism (10) further comprises a buffer assembly (5), the buffer assembly (5) is connected between the short support rod (421) and the drive assembly (3), and the buffer assembly (5) is configured to allow a change in a relative position between the short support rod (421) and the drive assembly (3).

12. The lifting mechanism (10) according to claim 11, wherein the short balancing rod (42) further comprises two limiting blocks (423), and the two limiting blocks (423) are spaced apart on a side that is of the short support rod (421) and that is away from the lifting member (2); and
the buffer assembly (5) comprises a buffer rod (51), a torsion spring (52), and a buffer rotating pin (53), the buffer rod (51) is mounted between the two limiting blocks (423), the buffer rod (51) is provided with an accommodating groove (511), an opening of the accommodating groove (511) faces the short support rod (421), the torsion spring (52) is accommodated in the accommodating groove (511), the buffer rotating pin (53) extends through the limiting blocks (423), the torsion spring (52), and the buffer rod (51), and two pins (52b) of the torsion spring (52) respectively abut against the short support rod (421) and a bottom wall of the accommodating groove (511).

13. The lifting mechanism (10) according to claim 12, wherein the short balancing rod (42) further comprises a limiting rib (425), and the limiting rib (425) is fastened to the limiting block (423) and protrudes toward a direction away from the short support rod (421); and
two support blocks (517) respectively protrude from two ends of the buffer rod (51), and the two pins (52b) of the torsion spring (52) elastically abut against the short support rod (421) and the bottom wall of the accommodating groove (511) respectively, to enable the two support blocks (517) to respectively abut against two limiting ribs (425).

14. The lifting mechanism (10) according to claim 12 or 13, wherein the drive assembly (3) comprises a motor (32), a drive shaft (34), a crank (35), and a transmission rod (36), the motor (32) is in transmission connection with the drive shaft (34), the drive shaft (34) is fastened to a first end (351) of the crank (35), a second end (352) of the crank (35) is rotatably connected to a first end (361) of the transmission rod (36), and a second end (362) of the transmission rod (36) is rotatably connected to the buffer rod (51); and
the motor (32) is configured to drive the crank (35) to rotate, to drive the transmission rod (36) to drive the buffer rod (51) to rotate.

15. The lifting mechanism (10) according to claim 14, wherein when the lifting mechanism (10) is in an extended state, an included angle formed by a connection line between the first end (361) of the transmission rod (36) and the second end (362) of the transmission rod (36) and a connection line between the first end (351) of the crank (35) and the second end (352) of the crank (35) is within a range of 180°±10°.

16. The lifting mechanism (10) according to claim 14 or 15, wherein the base (1) is further provided with a drive fastening part (13), and the drive fastening part (13) and the first fastening part (14) are spaced apart; and
the drive shaft (34) comprises an output shaft (341) and a support shaft (342), the output shaft (341) and the support shaft (342) are coaxially disposed, one end of the output shaft (341) is in transmission connection with the motor (32), the other end of the output shaft (341) is fastened to the first end (351) of the crank (35), one end of the support shaft (342) is fastened to the first end (351) of the crank (35), and the other end of the support shaft (342) is rotatably connected to the drive fastening part (13).

17. The lifting mechanism (10) according to any one of claims 1 to 16, wherein a boss is disposed at a peripheral edge of the lifting member (2);
the base (1) is provided with an extended limiting table (18) and a retracted limiting table (17) that are disposed opposite to each other, and the boss is located between the extended limiting table (18) and the retracted limiting table (17);
when the lifting mechanism (10) is in the extended state, the boss abuts against the extended limiting table (18); and
when the lifting mechanism (10) is in the retracted state, the boss abuts against the retracted limiting table (17).

18. The lifting mechanism (10) according to any one of claims 1 to 17, wherein the lifting mechanism (10) further comprises a decoration member (7), the decoration member (7) is mounted on the base (1), and the decoration member (7) surrounds the lifting member (2) and covers a gap between the lifting member (2) and the base (1).

19. The lifting mechanism (10) according to any one of claims 1 to 18, wherein the lifting mechanism (10) further comprises a waterproof member (63), the waterproof member (63) is mounted in the base (1), the waterproof member (63) surrounds the lifting member (2), one end of the waterproof member (63) is sealingly connected to the base (1), the other end of the waterproof member (63) is sealingly connected to the lifting member (2), and the waterproof member (63) is deformable as the lifting member (2) rises and falls.

20. A camera apparatus (100), comprising a camera module (20) and the lifting mechanism (10) according to any one of claims 1 to 19, wherein the camera module (20) is fastened to the lifting mechanism (10).

21. An electronic device (1000), comprising a housing (300) and the camera apparatus (100) according to claim 20, wherein an aperture (3004) is provided on the housing (300), the camera apparatus (100) is mounted in the housing (300), and a lifting member (2) of a lifting mechanism (10) of the camera apparatus (100) is exposed from the aperture (3004).
